(19) Europäisches Patentamt
European Patent Office
Office européen des brevets

(11) **EP 4 776 115 A1**

(12) **EUROPEAN PATENT APPLICATION**
published in accordance with Art. 153(4) EPC

(43) Date of publication:
**15.07.2026 Bulletin 2026/29**

(51) International Patent Classification (IPC):
***G06F 3/14*** *(2006.01)*

(21) Application number: 25814231.4

(22) Date of filing: **28.02.2025**

(86) International application number:
**PCT/CN2025/080059**

(87) International publication number:
**WO 2025/246507 (04.12.2025 Gazette 2025/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2024 CN 202410697901**

(71) Applicant: HUAWEI TECHNOLOGIES CO., LTD.
**Shenzhen 518129 (CN)**

(72) Inventors:
- CHEN, Lulu
  **Shenzhen, Guangdong 518129 (CN)**
- LIU, Chao
  **Shenzhen, Guangdong 518129 (CN)**
- ZHANG, Peng
  **Shenzhen, Guangdong 518129 (CN)**
- LI, Wei
  **Shenzhen, Guangdong 518129 (CN)**
- LI, Junjie
  **Shenzhen, Guangdong 518129 (CN)**
- CHEN, Qinxin
  **Shenzhen, Guangdong 518129 (CN)**
- ZHOU, Jianghao
  **Shenzhen, Guangdong 518129 (CN)**
- CHU, Chengcheng
  **Shenzhen, Guangdong 518129 (CN)**

(74) Representative: Goddar, Heinz J.
**Boehmert & Boehmert**
**Anwaltspartnerschaft mbB**
**Pettenkoferstrasse 22**
**80336 München (DE)**

(54) **METHOD FOR GENERATING IMAGE FRAME, AND ELECTRONIC DEVICE, CHIP SYSTEM AND STORAGE MEDIUM**

(57) This application relates to the field of electronic technologies, and provides an image frame generation method, an electronic device, a chip system, and a storage medium. The method is applied to the electronic device. A unified rendering process of the electronic device includes a main thread and a render thread. The method includes: The main thread generates a first preprocessing result of a first image frame after receiving a first vertical synchronization signal; the main thread synchronizes the first preprocessing result with the render thread; the render thread generates the first image frame based on the first preprocessing result; and in a process in which the render thread generates the first image frame based on the first preprocessing result, the main thread generates a second preprocessing result of a second image frame after receiving a second vertical synchronization signal, where the second preprocessing result is for generating the second image frame. According to the technical solutions provided in embodiments, a rate of generating an image frame can be increased, and frame dropping or jank in a display process of the electronic device can be reduced, thereby improving user experience.

A main thread generates a first preprocessing result of a first image frame after receiving a first VSync signal — S1501

The main thread synchronizes the first preprocessing result with a render thread — S1502

The render thread generates the first image frame based on the first preprocessing result — S1503

In a running process of the render thread, the main thread generates a second preprocessing result of a second image frame after receiving a second VSync signal, where the second preprocessing result is for generating the second image frame — S1504

FIG. 15

EP 4 776 115 A1

**Description**

This application claims priority to Chinese Patent Application No. 202410697901.4, filed with the China National Intellectual Property Administration on May 30, 2024 and entitled "IMAGE FRAME GENERATION METHOD, ELECTRONIC DEVICE, CHIP SYSTEM, AND STORAGE MEDIUM", which is incorporated herein by reference in its entirety.

**TECHNICAL FIELD**

This application relates to the field of electronic technologies, and in particular, to an image frame generation method, an electronic device, a chip system, and a storage medium.

**BACKGROUND**

With development of computer technologies, an electronic device supports simultaneous running of one or more applications, namely, foreground applications, in a foreground. Because each foreground application needs to present, on a screen, a user interface of the foreground application, but a display region of the screen of the electronic device is limited, an image frame actually displayed by the electronic device is a composition of user interfaces of the foreground applications.

Currently, the electronic device may composite, in a unified rendering (unified render) manner, the user interfaces of the foreground applications into one image frame for display. However, in a unified rendering period, a large quantity of operations need to be performed in a unified rendering process UniRender. For example, a render node needs to be updated, render nodes need to be traversed to generate an image frame, and the image frame needs to be sent for display. The rendering process UniRender is relatively complex, and a rate of generating the image frame is low. Consequently, frame dropping or jank occurs in a display process of the electronic device, resulting in poor user experience.

**SUMMARY**

This application provides an image frame generation method, an electronic device, a chip system, and a storage medium, to resolve a problem, in a conventional technology, that frame dropping or jank occurs in a display process of the electronic device due to a low rate of generating an image frame in a unified rendering process.

To achieve the foregoing objective, this application uses the following technical solutions.

According to a first aspect, this application provides an image frame generation method, applied to an electronic device. A unified rendering process of the electronic device includes a main thread and a render thread. The method includes: The main thread generates a first preprocessing result of a first image frame after receiving a first vertical synchronization signal; the main thread synchronizes the first preprocessing result with the render thread; the render thread generates the first image frame based on the first preprocessing result; and in a process in which the render thread generates the first image frame based on the first preprocessing result, the main thread generates a second preprocessing result of a second image frame after receiving a second vertical synchronization signal, where the second preprocessing result is for generating the second image frame.

The first vertical synchronization signal and the second vertical synchronization signal are signals with same content that are sent at a fixed frequency. The first image frame and the second image frame are two different image frames sequentially displayed on a screen.

In this embodiment, a process in which the electronic device performs unified rendering, a process in which the main thread processes the second image frame, and a process in which the render thread processes the first image frame are run in parallel. Therefore, according to the method provided in this embodiment, a rate of generating an image frame can be increased, and frame dropping or jank in a display process of the electronic device can be reduced, thereby improving user experience.

In some embodiments, the first preprocessing result is a first draw command list of the first image frame, and the first draw command list is an incremental draw command list or a full draw command list; the incremental draw command list includes a draw command of a newly added render node in a unified render tree of the first image frame, and/or a draw command of a render node whose information is changed; and the full draw command list includes draw commands of all render nodes in the unified render tree of the first image frame, where the unified render tree is a render tree obtained by combining render trees of all applications on which unified rendering is performed.

It should be noted that, when the main thread generates the full draw command list, dirty region calculation does not need to be performed, to be specific, the draw command of the newly added render node in the unified render tree and the draw command of the render node whose information is changed do not need to be determined, and a generation process is relatively simple. The incremental draw command list includes a small quantity of draw operations, so that subsequent workload of the render thread can be reduced, thereby improving work efficiency of the render thread.

In some embodiments, the first image frame includes a first part from a first application and a second part from a second application. That the main thread generates the first preprocessing result of the first image frame after receiving the first vertical synchronization signal includes: After receiving the first vertical synchronization signal, the main thread determines, by using a first subthread, a first draw command sublist corresponding to the first part; after receiving the first vertical synchronization signal, the main thread, determines, by using a second subthread, a second draw command sublist corresponding to the second part, where the first subthread and the second subthread run in parallel; and the main thread generates the first draw command list of the first image frame based on the first draw command sublist and the second draw command sublist.

In this embodiment, the main thread processes different parts of the first image frame in parallel by using a plurality of subthreads, so that efficiency of generating the first draw command list of the first image frame can be improved, thereby improving efficiency of generating the first image frame.

In some embodiments, that the render thread generates the first image frame based on the first preprocessing result includes: The render thread obtains a first draw result based on a first part of the first draw command list by using a first render subthread; the render thread obtains a second draw result based on a second part of the first draw command list by using a second render subthread, where the first render subthread and the second render subthread run in parallel; and the render thread generates the first image frame based on the first draw result and the second draw result.

For example, the render thread may split the first draw command list into N sublists, for example, the first part and the second part, based on a quantity of off-screen frame buffer objects (frame buffer object, FBO). Then, the N sublists are respectively processed by using N render subthreads, for example, the first render subthread and the second render subthread, to finally obtain the first image frame.

It should be noted that the first part and the second part of the first draw command list may further correspond to the first draw command sublist and the second draw command sublist in the main thread respectively. This is not limited in embodiments.

In this embodiment, the render thread processes different parts of the first draw command list in parallel by using a plurality of render subthreads, so that a draw operation in the draw command list can be quickly completed, to generate the first image frame.

In some embodiments, that the render thread generates the first image frame based on the first draw result and the second draw result includes: When the first draw command list is the incremental draw command list, the render thread generates the first image frame based on the first draw result, the second draw result, and a draw result of a previous image frame. For example, the render thread may obtain the first image frame by replacing a corresponding part in the draw result of the previous image frame with the first draw result and the second draw result.

In this embodiment, the first image frame is generated in an incremental draw manner, so that an amount of data processed by the main thread and the render thread can be reduced, thereby increasing a rate of generating the first image frame.

In some embodiments, the first draw command list is the incremental draw command list, and that the main thread generates the first preprocessing result of the first image frame after receiving the first vertical synchronization signal includes: The main thread receives node change information of a render tree of at least one application after receiving the first vertical synchronization signal; and the main thread generates the incremental draw command list of the first image frame based on the node change information.

For example, the main thread updates the unified render tree based on the node change information of the application, traverses the unified render tree to perform dirty region calculation, and copies a dirty region draw command into the incremental draw command list.

In this embodiment, in a process of generating the incremental draw command list based on the node change information, a computation amount of the main thread is small, and a quantity of draw commands in the incremental draw command list generated by the main thread is small, so that efficiency of generating an image frame can be improved.

In some embodiments, the first draw command list is the full draw command list, and that the main thread generates the first preprocessing result of the first image frame after receiving the first vertical synchronization signal includes: The main thread receives a render tree of at least one application after receiving the first vertical synchronization signal; and the main thread generates the full draw command list of the first image frame based on the render tree of the at least one application.

For example, after receiving render trees of applications, the main thread combines the render trees of the applications to obtain the unified render tree. Then, each entire render node in the unified render tree is recorded as a draw command into a buffer, to form the full draw command list.

In some embodiments, the first preprocessing result is the unified render tree of the first image frame, and the unified render tree is a render tree obtained by combining render trees of all applications on which unified rendering is performed.

In some embodiments, that the render thread generates the first image frame based on the first preprocessing result includes: The render thread generates the first image frame based on the first preprocessing result after receiving the first preprocessing result.

In this embodiment, the main thread may quickly start the render thread based on the first preprocessing result (for example, the first draw command list) to run, so that a rate of generating the first image frame is increased.

In some embodiments, that the render thread generates the first image frame based on the first preprocessing result includes: The render thread generates the first image frame based on the first preprocessing result after receiving the second vertical synchronization signal.

In this embodiment, both the main thread and the render thread are started and run by using a VSync signal, so that impact of the main thread on the render thread can be reduced, thereby improving running independence of the main thread and the render thread.

In some embodiments, that the main thread synchronizes the first preprocessing result with the render thread includes: The main thread sends the first preprocessing result to the render thread; or the main thread sends address information of the first preprocessing result to the render thread, where the address information is for accessing the first preprocessing result; or the main thread transfers a pointer of the first preprocessing result to the render thread.

It may be understood that, compared with a manner in which the first preprocessing result or the address information of the first preprocessing result is copied and then sent to the render thread, time consumed in a data transfer manner in which the pointer is transferred is only time consumed for pointer assignment, and a process of the data transfer manner is more convenient and efficient.

According to a second aspect, an embodiment provides an electronic device. The electronic device includes one or more processors and a memory. The memory is coupled to the one or more processors. The memory is configured to store computer program code, the computer program code includes computer instructions, and the one or more processors invoke the computer instructions, to cause the electronic device to perform the method according to the first aspect.

According to a third aspect, an embodiment of this application provides a chip system. The chip system is used in an electronic device, the chip system includes one or more processors, and the processor is configured to invoke computer instructions, to cause the electronic device to perform the method according to the first aspect.

According to a fourth aspect, an embodiment provides a computer-readable storage medium. The computer-readable storage medium stores a computer program. When the computer program is executed by a processor, the method according to the first aspect is implemented.

According to a fifth aspect, an embodiment provides a computer program product. The program product includes a computer program. When the computer program is run by an electronic device, the electronic device is caused to implement the method according to the first aspect.

It may be understood that, for beneficial effects of the second aspect to the fifth aspect, refer to related descriptions in the first aspect. Details are not described herein again.

## BRIEF DESCRIPTION OF DRAWINGS

FIG. 1 is a diagram of a user interface according to an embodiment of this application;
FIG. 2 is a diagram of a structure of an electronic device according to an embodiment;
FIG. 3 is a diagram of a software architecture of an electronic device according to an embodiment of this application;
FIG. 4 is a diagram of a unified rendering process according to an embodiment of this application;
FIG. 5 is a diagram of a scenario of abnormal unified rendering according to an embodiment of this application;
FIG. 6 is a diagram of a main thread and a render thread included in a unified rendering process according to an embodiment of this application;
FIG. 7 is a diagram of a main thread and a render thread included in a unified rendering process according to another embodiment of this application;
FIG. 8 is a diagram of a process in which a main thread updates a unified render tree according to an embodiment of this application;
FIG. 9 is a diagram of a node relationship in a unified render tree according to an embodiment of this application;
FIG. 10 is a diagram of marked render nodes according to an embodiment of this application;
FIG. 11 is a diagram of a data structure of a draw operation in a render thread according to an embodiment of this application;
FIG. 12 is a diagram of commands in a main thread and a render thread according to an embodiment of this application;
FIG. 13 is a diagram of converting a data format of a draw operation by a render thread according to an embodiment of this application;
FIG. 14 is a diagram of converting a data format of a draw operation by a render thread according to another embodiment of this application;

FIG. 15 is a schematic flowchart of an image frame generation method according to an embodiment of this application;

FIG. 16 is a diagram of running procedures of a main thread and a render thread according to an embodiment of this application;

FIG. 17 is a schematic flowchart of an image frame generation method according to another embodiment of this application;

FIG. 18 is a diagram of running procedures of a main thread and a render thread according to another embodiment of this application;

FIG. 19 is a diagram of a frame rate of generating an image frame according to an embodiment of this application;

FIG. 20 is a schematic flowchart of an image frame generation method according to still another embodiment of this application;

FIG. 21 is a diagram of running procedures of a main thread and a render thread according to still another embodiment of this application;

FIG. 22 is a diagram of a frame rate of generating an image frame according to another embodiment of this application;

FIG. 23 is a flowchart of generating a first draw command list by a main thread according to an embodiment of this application;

FIG. 24 is a diagram of a process in which a main thread generates a first draw command list according to an embodiment of this application;

FIG. 25 is a flowchart of generating a first image frame by a render thread based on a first draw command list according to an embodiment of this application;

FIG. 26 is a diagram of a process in which a render thread generates a first image frame based on a first draw command list according to an embodiment of this application; and

FIG. 27 is a diagram of a structure of a chip system according to an embodiment of this application.

## DESCRIPTION OF EMBODIMENTS

It should be understood that, in descriptions of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

Terms "first" and "second" in embodiments are merely intended for a purpose of description, and shall not be understood as an indication or an implication of relative importance or an implicit indication of a quantity of indicated technical features. Therefore, a feature limited by "first" or "second" may explicitly or implicitly include one or more features. In the descriptions of embodiments, unless otherwise stated, "a plurality of" means two or more.

For ease of understanding, terms and concepts related to embodiments of this application are first described below.

(1) User interface

The user interface (user interface, UI) is an interface through which an application and an operating system interact with and exchange information with a user, and is used to implement conversion between an internal form of the information and a form acceptable to the user. Alternatively, the user interface is interface source code written in a specific computer language like Java or an extensible markup language (extensible markup language, XML). The interface source code is parsed and rendered on an electronic device, and is finally presented as content that can be identified by the user. In conclusion, existence of the user interface significantly facilitates interaction between the user and the electronic device.

(2) Graphical user interface

The graphical user interface (graphical user interface, GUI) is a common form of a user interface, in other words, a user interface that is related to a computer operation and that is displayed in a graphic manner. A visual interface element such as text, an icon, a button, a menu, a tab, a text box, a dialog box, a status bar, a navigation bar, or a widget may be displayed on the GUI on a screen of an electronic device.

(3) Display interface

In embodiments, the display interface may also be referred to as an image frame or a screen interface, and specifically refers to content presented on a screen of an electronic device. When the electronic device has a plurality of foreground applications, the display interface is a composition of user interfaces of the plurality of foreground applications.

(4) Vertical synchronization signal

The vertical synchronization (vertical synchronization, VSync) signal is a concept in computer graphics, and is for controlling an output and display of an image frame. A main function of the vertical synchronization signal is to eliminate screen tearing. In other words, when a refresh rate of a computer graphic is not synchronized with that of a display, two parts of an image, that is, an upper part and a lower part of a screen are refreshed at different time. Specifically, before the display completes displaying an image frame and prepares to display a next image frame, a controller of the display sends the VSync signal. A frequency of the VSync signal is related to a refresh rate of an electronic device. For example, the frequency of the VSync signal is the same as a refresh rate of a screen of the electronic device.

The VSync signal usually includes a software VSync signal and a hardware VSync signal, and the software VSync signal and the hardware VSync signal usually keep periodic synchronization. For example, the software VSync signal includes VSync-APP, VSync-RS, and the like. VSync-APP is for triggering a rendering process of an application. VSync-RS is for triggering a unified rendering process of a render service (render service, RS). The hardware VSync signal includes VSync-HW, and VSync-HW is for triggering a display refresh process of the display.

(5) Render tree

The render tree (render tree) is a data structure for generating a user interface of an application, and records a part or all of information for generating a frame of the user interface of the application. When the application has a plurality of windows (window) or is displayed in different display regions (for example, different screens), a plurality of render trees need to be generated independently.

Each render tree may include a plurality of render nodes (render node), and each render node includes a render attribute and a draw operation (draw operation struct, DrawOP) list. The render attribute includes attribute information such as a position, a size, and transparency of a view (view) to be rendered by the render node on a surface (surface). A draw command list records draw operations and a draw sequence of the draw operations. The draw operation is for determining content of the view such as a line, a rectangle, or a circle to be rendered by the render node.

The following specifically describes the technical solutions provided in embodiments of this application with reference to the accompanying drawings.

With development of computer technologies, an electronic device supports simultaneous running of one or more applications (application, App) in a foreground. For ease of description, an application running in the foreground is referred to as a foreground application in embodiments. Because each foreground application needs to present, on a screen, a user interface of the foreground application, but a display region of the screen of the electronic device is limited, content (that is, an image frame) actually displayed by the electronic device is a display result obtained by compositing user interfaces of the foreground applications according to a specific rule. It should be noted that the specific rule may be determined based on a system configuration of the electronic device or a user operation. This is not limited in embodiments.

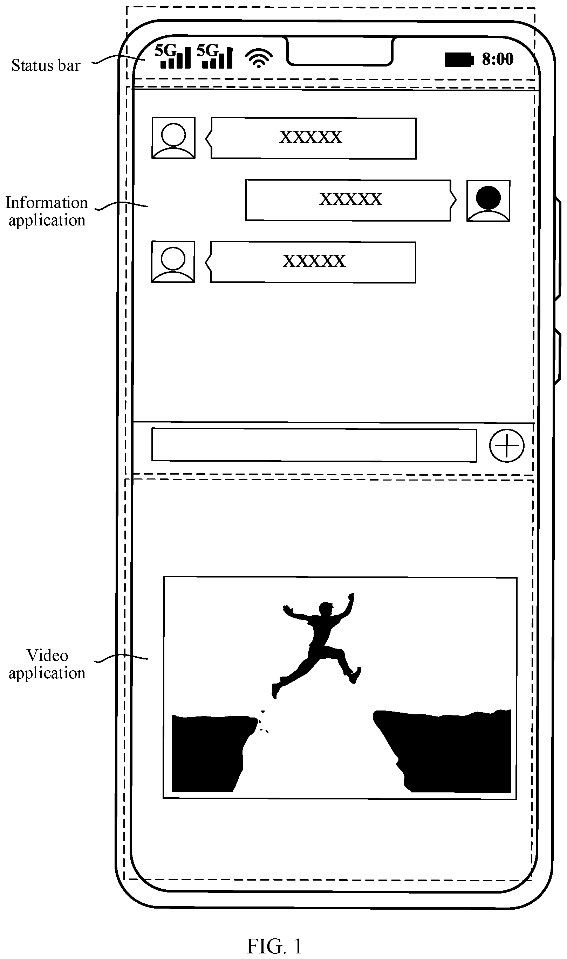

For example, as shown in FIG. 1, foreground applications of an electronic device include a status bar, an information application, and a video application. In an image frame of the electronic device, a user interface of the status bar is located at the top of the image frame. User interfaces of the information application and the video application are displayed in a split-screen manner according to a user instruction, and respectively occupy the upper half and the lower half of a remaining part of the image frame.

In a running process of the foreground application, the user interface of the foreground application usually needs to change continuously, including changing display content of the interface, a display position of the display content, and the like based on a configuration of the application or a user operation. FIG. 1 is used as an example. The user interface of the status bar in FIG. 1 needs to be refreshed based on information such as a cellular signal type, a wireless fidelity (wireless fidelity, Wi-Fi) connection status, a battery level, and time. The user interface of the information application needs to be refreshed based on an input operation of a user and received information. The user interface of the video application needs to be refreshed based on a to-be-played video frame or a user operation.

Because the image frame of the electronic device is a display composition of user interfaces of foreground applications, the image frame of the electronic device also needs to change in a process in which the user interface of the foreground application changes. Therefore, each time before refreshing the image frame, the electronic device needs to generate a new image frame based on running statuses of all the foreground applications.

The following describes an example of a process in which the electronic device generates an image frame.

In embodiments, the electronic device includes a terminal device, and the terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

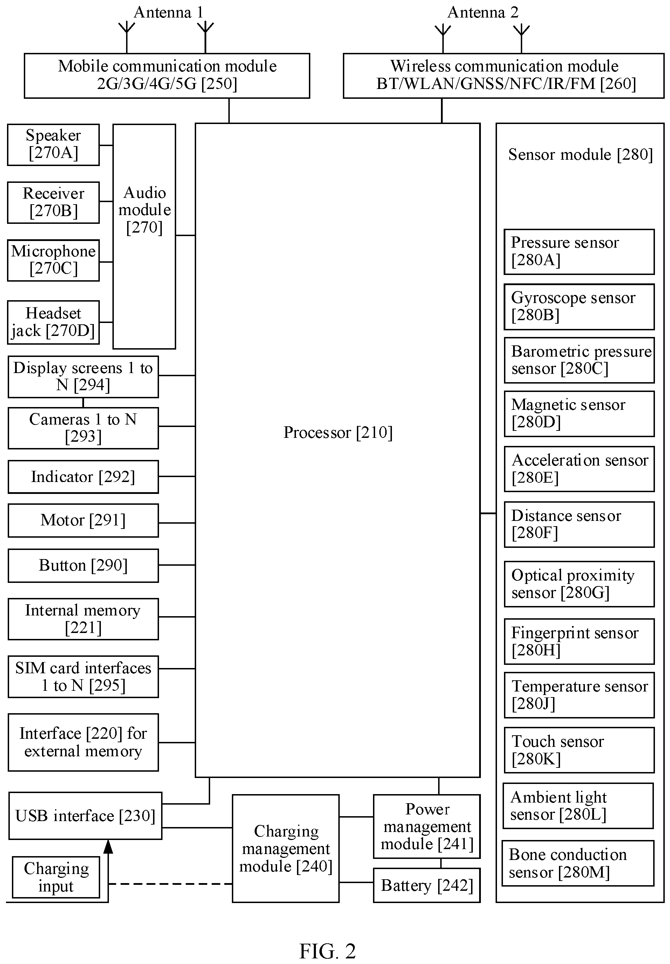

FIG. 2 is a diagram of a structure of an electronic device according to an embodiment. The electronic device 200 may include a processor 210, an interface for external memory 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display screen 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application does not constitute a specific limitation on the electronic device 200. In some other embodiments of this application, the electronic device 200 may include more or fewer components than those shown in the figure, or some components may be combined, or some components may be split, or a different component arrangement may be used. The components shown in the figure may be implemented by hardware, software, or a combination of software and hardware.

For example, when the electronic device 200 is a mobile phone or a tablet computer, the electronic device 200 may include all components shown in the figure, or may include only some components shown in the figure.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 200. The controller may generate an operation control signal based on an instruction operation code and a time sequence signal, to complete control of instruction reading and instruction execution.

A memory may be further disposed in the processor 210, and is configured to store instructions and data. In some embodiments, the memory in the processor 210 is a cache memory. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

The charging management module 240 is configured to receive a charging input from a charger. The charger may be a wireless charger or a wired charger. In some embodiments of wired charging, the charging management module 240 may receive a charging input of the wired charger through the USB interface 230. In some embodiments of wireless charging, the charging management module 240 may receive a wireless charging input through a wireless charging coil of the electronic device 200. The charging management module 240 may further supply power to the electronic device through the power management module 241 while charging the battery 242.

The power management module 241 is configured to connect to the battery 242, the charging management module 240, and the processor 210. The power management module 241 receives an input from the battery 242 and/or the charging management module 240, to supply power to the processor 210, the internal memory 221, an external memory, the display screen 294, the camera 293, the wireless communication module 260, and the like. The power management module 241 may be further configured to monitor parameters such as a battery capacity, a quantity of battery cycles, and a battery health status (electric leakage and impedance).

In some other embodiments, the power management module 241 may alternatively be disposed in the processor 210. In some other embodiments, the power management module 241 and the charging management module 240 may alternatively be disposed in a same device.

A wireless communication function of the electronic device 200 may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 250 may provide a wireless communication solution that is applied to the electronic device 200 and that includes 2G/3G/4G/5G or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering and amplification on the received electromagnetic wave, and transmit the electromagnetic wave to the modem processor for demodulation. The mobile communication module 250 may further amplify a signal modulated by the modem processor, and convert, through the antenna 1, an amplified signal into an electromagnetic wave for radiation.

In some embodiments, at least some functional modules in the mobile communication module 250 may be disposed in the processor 210. In some embodiments, at least some functional modules in the mobile communication module 250 and at least some modules in the processor 210 may be disposed in a same device.

The modem processor may include a modulator and a demodulator. The modulator is configured to modulate a to-be-sent low-frequency baseband signal into a medium-/highfrequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (not limited to the speaker 270A, the receiver 270B, and the like), or displays an image or a video through the display screen 294. In some embodiments, the modem processor may be an independent device. In other embodiments, the modem processor may be independent of the processor 210, and is disposed in a same device as the mobile communication module 250 or another functional module.

The wireless communication module 260 may provide a wireless communication solution that is applied to the electronic device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 260 may be one or more devices integrating at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert, through the antenna 2, the signal into an electromagnetic wave for radiation.

In some embodiments, the antenna 1 and the mobile communication module 250 of the electronic device 200 are coupled, and the antenna 2 and the wireless communication module 260 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 200 implements a display function through the GPU, the display screen 294, the application processor, and the like. The GPU is a microprocessor for image processing, and is connected to the display screen 294 and the application processor. The GPU is configured to perform mathematical and geometric computation for graphics rendering. The processor 210 may include one or more GPUs, which execute program instructions to generate or change display information.

The display screen 294 is configured to display an image, a video, and the like, for example, an image frame in embodiments of this application. The display screen 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 200 may include one or N display screens 294, where N is a positive integer greater than 1.

The electronic device 200 may implement a photographing function through the ISP, the camera 293, the video codec, the GPU, the display screen 294, the application processor, and the like.

The ISP is configured to process data fed back by the camera 293. For example, during photographing, a shutter is pressed, and light is emitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 293.

The camera 293 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 200 may include one or N cameras 293, where N is a positive integer greater than 1.

The digital signal processor is configured to process a digital signal, and may process another digital signal in addition to the digital image signal. For example, when the electronic device 200 selects a frequency, the digital signal processor is configured to perform Fourier transform on frequency energy.

The video codec is configured to compress or decompress a digital video. The electronic device 200 may support one or more video codecs. Therefore, the electronic device 200 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. The NPU can implement application such as intelligent cognition of the electronic device 200, for example, image recognition, facial recognition, speech recognition, and text understanding.

In this embodiment of this application, the NPU or another processor may be configured to perform operations such as analysis and processing on an image in a video stored in the electronic device 200.

The interface for external memory 220 may be configured to connect to an external memory card, for example, a micro SD card, to extend a storage capability of the electronic device 200. The external memory card communicates with the processor 210 through the interface for external memory 220, to implement a data storage function. For example, files such as music and a video are stored in the external memory card.

The internal memory 221 may be configured to store computer-executable program code. The executable program code includes instructions. The processor 210 runs the instructions stored in the internal memory 221, to perform various functional applications of the electronic device 200 and data processing. The internal memory 221 may include a program storage region and a data storage region. The program storage region may store an operating system, an application needed by at least one function (for example, a sound playback function or an image playback function). The data storage region may store data (for example, audio data or a phone book) created in a process of using the electronic device 200.

In addition, the internal memory 221 may include a high-speed random access memory, or may include a non-volatile memory, for example, at least one magnetic disk storage device, a flash memory, or a universal flash storage (universal flash storage, UFS).

The electronic device 200 may implement an audio function through the audio module 270, the speaker 270A, the receiver 270B, the microphone 270C, the headset jack 270D, the application processor, and the like.

The audio module 270 is configured to convert a digital audio signal into an analog audio signal output, and is also configured to convert an analog audio input into a digital audio signal. The audio module 270 may be further configured to encode and decode an audio signal. In some embodiments, the audio module 270 may be disposed in the processor 210, or some functional modules in the audio module 270 may be disposed in the processor 210.

The speaker 270A, also referred to as a "loudspeaker", is configured to convert an audio electrical signal into a sound signal. The electronic device 200 may be used to listen to music or answer a hands-free call through the speaker 270A. For example, the speaker may play a comparison analysis result provided in this embodiment of this application.

The receiver 270B, also referred to as an "earpiece", is configured to convert an audio electrical signal into a sound signal. When the electronic device 200 is used to answer a call or voice information, the receiver 270B may be put close to a human ear to listen to a voice.

The microphone 270C, also referred to as a "mic" or "mike", is configured to convert a sound signal into an electrical signal. When making a call or sending voice information, a user may make a sound near the microphone 270C through the mouth, to input a sound signal into the microphone 270C. At least one microphone 270C may be disposed in the electronic device 200. In some other embodiments, two microphones 270C may be disposed in the electronic device 200, to collect a sound signal and implement a noise reduction function. In some other embodiments, three, four, or more microphones 270C may be alternatively disposed in the electronic device 200, to collect a sound signal, implement noise reduction, identify a sound source, so as to implement a directional recording function and the like.

The headset jack 270D is configured to be connected to a wired headset. The headset jack 270D may be the USB interface 230, or may be an open mobile electronic device platform (open mobile terminal platform, OMTP) standard interface with 3.5 mm, or a cellular telecommunications industry association of the USA (cellular telecommunications industry association of the USA, CTIA) standard interface.

The button 290 includes a power button, a volume button, and the like. The button 290 may be a mechanical button, or a touch-sensitive button. The electronic device 200 may receive a button input, and generate a button signal input related to user settings and function control of the electronic device 200.

The motor 291 may generate a vibration prompt. The motor 291 may be configured to provide an incoming call vibration prompt and a touch vibration feedback. For example, touch operations performed on different applications (for example, photographing and audio playback) may correspond to different vibration feedback effects. The motor 291 may also correspond to different vibration feedback effects for touch operations performed on different regions of the display screen 294. Different application scenarios (for example, a time reminder, information receiving, an alarm clock, and a game) may also correspond to different vibration feedback effects. A touch vibration feedback effect may be further customized.

The indicator 292 may be an indicator light, and may be configured to indicate a charging status and a battery change, or may be configured to indicate a message, a missed call, a notification, and the like.

The SIM card interface 295 is configured to connect to a SIM card. The SIM card may be inserted into the SIM card interface 295 or removed from the SIM card interface 295, to implement contact with and separation from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into the same SIM card interface 295. Types of the plurality of cards may be the same or different. The SIM card interface 295 may be compatible with different types of SIM cards. The SIM card interface 295 may also be compatible with an external memory card. The electronic device 200 interacts with a network through the SIM card, to implement functions such as calling and data communication. In some embodiments, the electronic device 200 uses an eSIM, namely, an embedded SIM card. The eSIM card may be embedded in the electronic device 200, and cannot be separated from the electronic device 200.

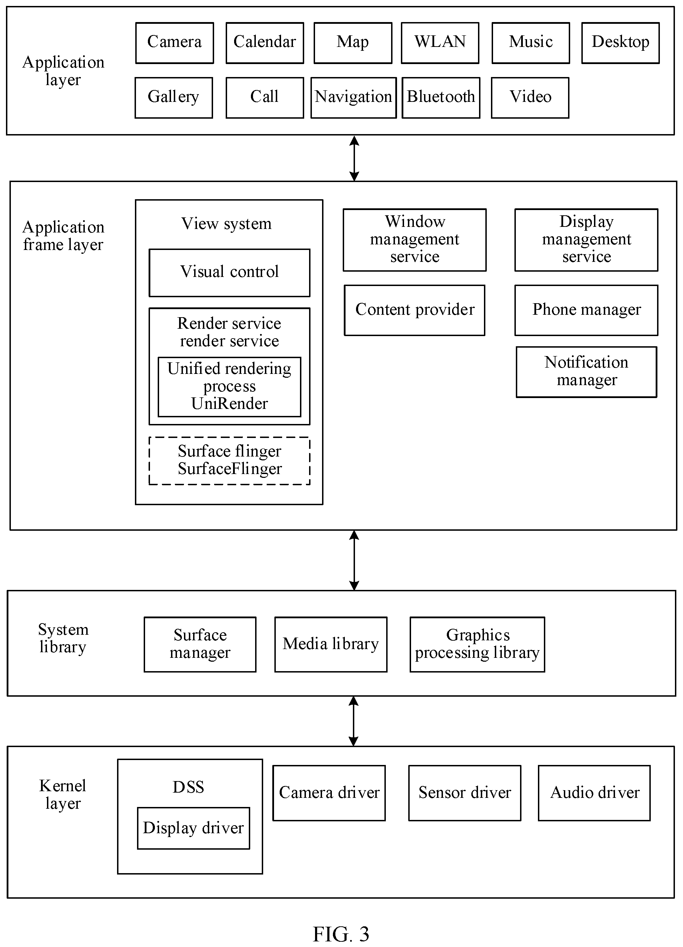

FIG. 3 is a diagram of a software architecture of an electronic device according to an embodiment of this application. As shown in FIG. 3, a layered architecture divides software into a plurality of layers, and each layer has a clear role and task. The layers communicate with each other through a software interface. In some embodiments, the software architecture of the electronic device is divided into four layers: an application layer, an application framework layer, a system library, and a kernel layer from top to bottom.

The **application layer** may include a series of application packages. As shown in FIG. 3, the application packages may include Camera, Gallery, Calendar, Call, Map, Navigation, WLAN, Music, Desktop, Bluetooth, Video, and the like.

An application process of an application includes at least a main thread (main thread), which may also be referred to as a UI thread (UI thread). The main thread is configured to generate a render tree for the application based on a running status of the application. For example, if the application supports off-screen rendering (off-screen render), the application process further includes a render thread (render thread). The render thread is configured to generate a user interface based on the render tree. The user interface usually exists in a form of a bitmap (bitmap) in a computer.

In some embodiments, if a foreground application uses unified rendering (UniRender), when each VSync signal (for example, VSync-App) arrives, a main thread of the foreground application generates a render tree based on a running status of the foreground application, and sends the render tree to the application framework layer for further processing.

In some other embodiments, if a foreground application uses off-screen rendering, when each VSync signal arrives, a main thread of the foreground application first generates a render tree, and then a render thread of the foreground application draws a user interface based on the render tree, and sends the generated user interface to the application framework layer for further processing.

The **application framework layer** provides an application programming interface (application programming interface, API) and a programming framework for an application at the application layer. The application framework layer includes some predefined functions. For example, as shown in FIG. 3, the application framework layer may include a window management service, a display management service, a content provider, a view system, a phone manager, a resource manager, a notification manager, and the like.

The window management service is responsible for starting, adding, and deleting a window, and can determine an application displayed in the window, determine creation, destruction, an attribute change, and the like of the application layer, and determine whether there is a status bar, a lock screen, screen capture, and the like.

The display management service can obtain a quantity of display regions and a size of the display region, and is responsible for starting, adding, and deleting the display region.

The content provider is configured to: store and obtain data, and enable the data to be accessed by an application. The data may include a video, an image, audio, dialed and answered calls, a browsing history and bookmark, a phone book, and the like.

The phone manager is configured to provide a communication function of the electronic device, for example, management of a call status (including answering, declining, or the like).

The resource manager provides various resources for an application, such as a localized character string, an icon, a picture, a layout file, and a video file.

The notification manager enables an application to display notification information in the status bar, and may be configured to convey a notification message. The displayed information may automatically disappear after a short pause without user interaction. For example, the notification manager is configured to notify download completion or provide a message notification. In addition, the notification manager may alternatively provide a notification that appears in a top status bar of a system in a form of a graph or a scroll bar text, for example, a notification of an application run on a background, or may provide a notification that appears on a screen in a form of a dialog interface. For example, text information is displayed in the status bar, a prompt tone is played, the electronic device vibrates, or an indicator light blinks.

The view system includes visual controls such as a control for displaying text and a control for displaying a picture. The view system may be configured to construct an application. An image frame may include one or more views. For example, a view including a short message notification icon may include a text display view and a picture display view.

In this embodiment, the view system further includes a functional module configured to perform unified rendering: a render service (RenderService, RS). RenderService can receive render trees of one or more foreground applications by running a unified rendering process (UniRender), and combine the one or more render trees into a unified render tree. In addition, UniRender may further synchronize layer information such as layer creation, destruction, and an attribute change through the window management service, and synchronize display region information such as a screen size from the display management service.

It should be noted that, in this embodiment, the unified rendering process (UniRender) and the application process are mutually independent processes. An application and the unified rendering process complete data exchange through inter-process communication (inter-process communication, IPC). For specific content of the unified rendering process, refer to Patent Application No. 2021114105136, entitled "INTERFACE GENERATION METHOD AND ELECTRONIC DEVICE", and Patent Application No. 202111410643X, entitled "INTERFACE GENERATION METHOD AND ELECTRONIC DEVICE". Details are not described herein.

Optionally, in some embodiments of this application, the view system further includes a surface flinger (SurfaceFlinger). In an electronic device configured with a whitelist, when a foreground application does not belong to the whitelist, after a main thread of the foreground application generates a render tree, a render thread of the foreground application generates a user interface, and then transfers the user interface to SurfaceFlinger for layer compositing to generate an image frame to be sent for display.

Optionally, in some embodiments of this application, when foreground applications include both an application in the whitelist and an application not in the whitelist, UniRender is responsible for generating a user interface of the application in the whitelist. After generating the user interface, UniRender transfers the user interface to SurfaceFlinger, and then SurfaceFlinger performs layer compositing on the user interface and a user interface of another application not in the whitelist to generate an image frame to be sent for display.

The **system library** may include a plurality of functional modules, for example, a surface manager (surface manager), a media library (media library), a graphics processing library, and the like. Details are described below.

The surface manager is configured to manage a display subsystem, and can perform compositing of 2-dimensional (2-dimensional, 2D) and 3-dimensional (3-dimensional, 3D) layers on a plurality of applications.

The media library supports playback and recording in a plurality of commonly used audio and video formats, a static image file, and the like. The media library may support a plurality of audio and video coding formats, for example, a moving picture experts group-4 (moving picture experts group, MPEG-4), H.264, a moving picture experts group audio layer 3 (moving picture experts group audio layer III, MP3), advanced audio coding (advanced audio coding, AAC), adaptive multi-rate (adaptive multi-rate, AMR), joint photographic experts group (joint photographic experts group, JPEG), and portable network graphics (portable network graphics, PNG).

The graphics processing library includes a three-dimensional graphics processing library, a two-dimensional graphics engine, and the like. The three-dimensional graphics processing library is configured to implement 3D graphics drawing, image rendering, layer compositing, layer processing, and the like. The two-dimensional graphics engine is a drawing engine for two-dimensional drawing.

The **kernel layer** is a layer between hardware and software. The kernel layer includes at least a display driver, a camera driver, a sensor driver, an audio driver, a virtual card driver, and the like.

Based on the hardware and software architecture of the electronic device shown in the foregoing embodiment, the electronic device may generate an image frame in an off-screen rendering manner or a unified rendering manner. However, compared with off-screen rendering, unified rendering can reduce a quantity of rendering times, and reduce power consumption of the electronic device, thereby improving user experience. Therefore, currently, the image frame is usually generated in the unified rendering manner.

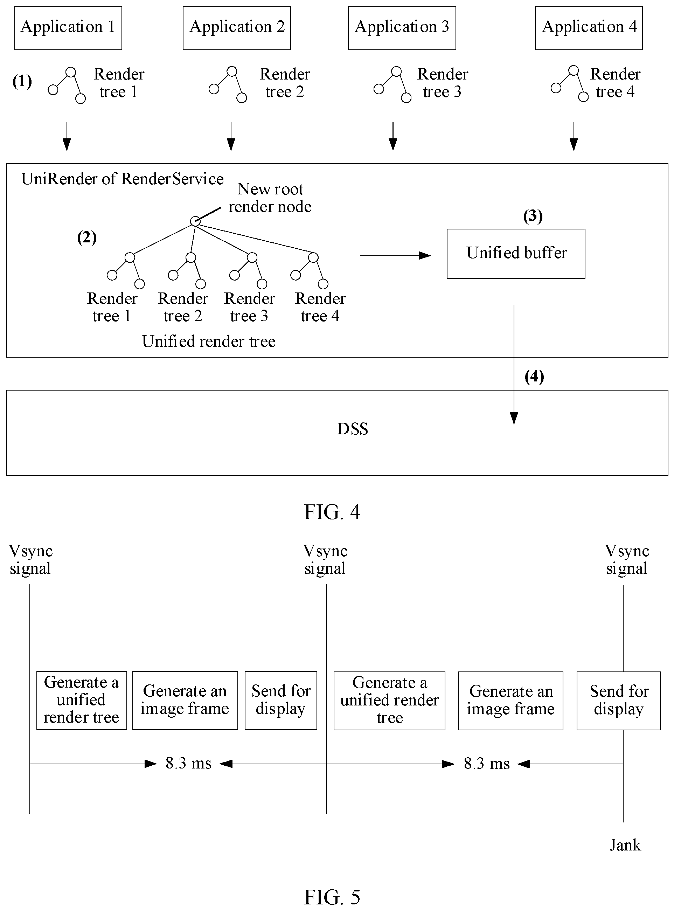

In some embodiments, a process in which the electronic device generates the image frame in the unified rendering manner is shown in FIG. 4.

Refer to FIG. 4. For example, foreground applications include an application 1 to an application 4. The process in which the electronic device generates the image frame in the unified rendering manner specifically includes the following processes (1) to (4).

(1) The foreground application sends a render tree to RenderService.

When each VSync signal arrives, each foreground application uses, based on a running status of the foreground application, a main thread of the foreground application to generate a render tree, and sends the render tree to RenderService cross processes. For example, the application 1 to the application 4 respectively generate a render tree 1 to a render tree 4 by using respective main threads, and send the render tree 1 to the render tree 4 to RenderService.

For example, a process in which the main thread of the foreground application generates the render tree includes: invalidating a view hierarchy (view hierarchy) of the foreground application. The view hierarchy represents a parent-child relationship between views (view) in a user interface. Then, the main thread traverses views of the foreground application, re-arranges the views, determines attribute information and a draw operation DrawOP of each view, and uses the attribute information and the draw operation DrawOP of each view as a render node to form the render tree.

It should be noted that a view is a basic element that forms a user interface of an application, and one control in the user interface may correspond to one or more views. The user interface that needs to be displayed by the application includes a plurality of nested views, and there is a parent-child relationship between different views. Therefore, a parent-child relationship between render nodes of the render tree generated by the main thread by traversing the views is the same as the parent-child relationship between the views. In other words, the parent-child relationship between the views determines a nesting relationship between different render nodes, to ensure that a correct user interface can be correctly rendered when a render thread (for example, a render thread of the application or a render thread in a unified rendering process) generates an interface based on the render tree.

(2) RenderService combines render trees into a unified render tree.

RenderService receives, through UniRender, the render tree sent by each foreground application, obtains window control information and display region information from a window management service and a display management service, and combines, based on the window control information and the display region information, render trees of foreground applications located in a same display region into the unified render tree. The window control information includes a Z-order (Z-order) of windows, and the display region information includes identification information of a display region.

In some embodiments, UniRender may generate a new root render node, and use an original root render node of each render tree as a child node at a same level as the new root render node, to generate the unified render tree. For example, as shown in FIG. 4, UniRender generates a new root render node, and uses original root render nodes of the render tree 1 to the render tree 4 as child nodes at a same level as the new root render node, to generate the unified render tree.

Optionally, in a process of generating the unified render tree, UniRender may first determine an upper-lower shielding relationship between layers of the foreground applications according to a Z-order (Z-order) of layers corresponding to the foreground applications, to delete, in the process of generating the unified render tree, a render node corresponding to a completely shielded view.

(3) RenderService generates an image frame based on the unified render tree.

After generating the unified render tree, UniRender of RenderService invokes a layer processing library, to sequentially traverse render nodes and perform, in a unified buffer, draw operations of the render nodes in the unified render tree, thereby generating the image frame. It should be noted that display information of the image frame is carried on a bitmap, and a display of the electronic device may present the image frame on a screen based on the bitmap.

(4) RenderService sends the image frame to a display subsystem.

UniRender of RenderService stores the bitmap of the image frame in a frame buffer (frame buffer). The display subsystem (display subsystem, DSS) obtains the bitmap from the frame buffer and displays the image frame on the screen based on the bitmap. For example, the frame buffer may be an on-screen buffer (on-screen buffer).

According to the foregoing processes (1) to (4), the electronic device may composite, in the unified rendering manner, user interfaces of the foreground applications into the image frame for display. However, in the foregoing unified rendering process, in one rendering period, UniRender needs to perform a large quantity of operations, and a rendering process is relatively complex, resulting in low rendering efficiency.

For example, as shown in FIG. 5, when a refresh rate of the electronic device is 120 fps (frame/second), a time interval between two adjacent VSync signals is only 8.3 ms, that is, one rendering period is only 8.3 ms. However, in one rendering period, UniRender needs to perform operations such as generating a unified render tree, generating an image frame based on the unified render tree, and sending the image frame for display, to complete rendering of one image frame.

It may be understood that, because a unified rendering period is short, and a rendering process of UniRender is complex, UniRender cannot complete rendering work in one unified rendering period. Consequently, a bitmap of an image frame cannot be sent for display in time, and frame dropping or jank (Jank) occurs in a display process of the electronic device, resulting in poor user experience.

Therefore, this application provides an image frame generation method, to increase a rate of generating an image frame in a unified rendering mode, so that frame dropping or jank in a display process of an electronic device is reduced, thereby improving user experience.

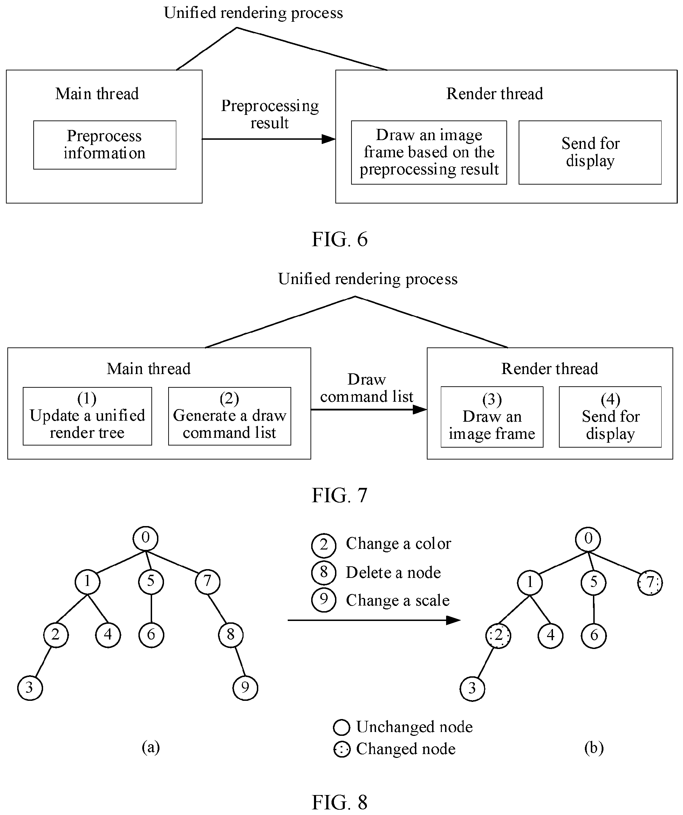

In an embodiment, refer to FIG. 6. A unified rendering process UniRender includes a main thread and a render thread, and the two threads jointly undertake a task that needs to be executed by UniRender. The main thread preprocesses information in a process of generating an image frame, and synchronizes a preprocessing result with the render thread. The render thread generates the image frame based on the preprocessing result of the main thread.

It should be noted that the main thread supports processing different image frames in serial, and the render thread also supports processing different image frames in serial. In addition, the main thread and the render thread can further run in parallel when processing different image frames.

In some embodiments of this application, refer to FIG. 7. Tasks executed by the main thread and the render thread of UniRender specifically include the following content 1 and 2.

## 1. Main thread of UniRender

In this embodiment, the main thread of UniRender (referred to as the main thread for short below) is configured to update a unified render tree based on an application message, and generate a draw command list of the image frame based on an updated unified render tree. The following content (1) and (2) are specifically included.

(1) Update the unified render tree based on the application message.

The application message is a message sent by at least one foreground application, and may be a render tree of the foreground application, or may be node change information of at least one render node in a render tree of the foreground application. For example, the node change information may be updated attribute information or an updated draw operation of the render node, or may be animation stepping information of the render node, or the like. The animation stepping information includes motion information of the render node between a plurality of user interfaces, for example, a start position, a stepping rate, and an end position.

In some embodiments, the foreground application generates a render tree after receiving a VSync signal, and sends the render tree to the main thread. Based on this, a process in which the main thread updates the unified render tree based on the application message may be: The main thread receives and combines render trees sent by foreground applications to obtain a new unified render tree.

In some other embodiments, in most cases, a user interface of the foreground application changes very little or does not even change between two consecutive frames. Therefore, after receiving the VSync signal, the foreground application may determine a render node that is changed (that is, a changed render node), and send only node change information of the changed render node to the main thread, to reduce an amount of data during cross-process interaction and reduce power consumption of an electronic device. Based on this, a process in which the main thread updates the unified render tree based on the application message may be: The main thread receives node change information sent by the foreground applications, and updates the unified render tree based on the node change information. For example, based on a unified render tree of a user interface of a previous frame, a render node is newly added, a render attribute and a draw operation of the render node are updated, or the render node is deleted.

In an example, a unified render tree in the main thread is shown in (a) in FIG. 8. The unified render tree includes a root render node 0, child nodes of the root render node 0 include a render node 1, a render node 5, and a render node 7, child nodes of the render node 1 include a render node 2 and a render node 4, a child node of the render node 2 includes a render node 3, a child node of the render node 5 includes a render node 6, a child node of the render node 7 includes a render node 8, and a child node of the render node 8 includes a render node 9. It is assumed that the main thread receives node change information of the render node 2, the render node 8, and the render node 9 from an application, where the node change information of the render node 2 is changing a background color to a color A, the node change information of the render node 8 is deleting the node, and the node change information of the render node 9 is changing an image scale (scale) a scale B. In this case, an updated unified render tree of the main thread is shown in (b) in FIG. 8.

It should be noted that, in the render tree, a parent node includes a child node, or a draw operation of the parent node includes a draw operation of the child node. Therefore, when updating a target render node, the main thread needs to sequentially traverse, from a root node of the unified render tree, upper-level nodes of the target render node in descending order of levels, and then find the target render node, to update node information of the target render node.

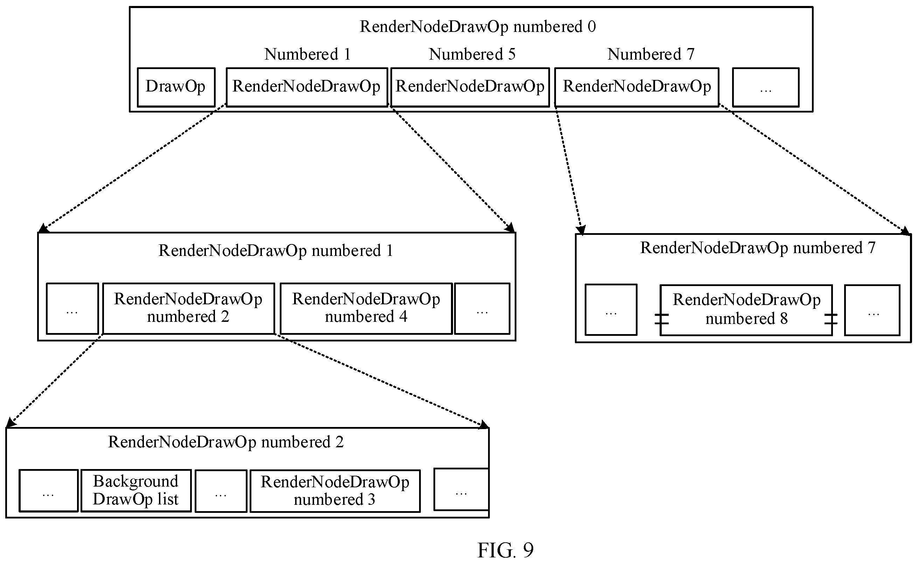

The unified render tree shown in (a) in FIG. 8 is used as an example. For a node relationship in the unified render tree, refer to FIG. 9. Specifically, the following content is included: A draw operation (namely, RenderNodeDrawOp numbered 0) of the root render node 0 includes draw operations (namely, RenderNodeDrawOp numbered 1, Render-NodeDrawOp numbered 5, and RenderNodeDrawOp numbered 7) of the render node 1, the render node 5, and the render node 7. The draw operation (namely, RenderNodeDrawOp numbered 1) of the render node 1 includes draw operations (namely, RenderNodeDrawOp numbered 2 and RenderNodeDrawOp numbered 4) of the render node 2 and the render node 4. The draw operation (namely, RenderNodeDrawOp numbered 2) of the render node 2 includes a draw operation (namely, RenderNodeDrawOp numbered 3) of the render node 3. The draw operation (namely, RenderNodeDrawOp numbered 5) of the render node 5 includes a draw operation (namely, RenderNodeDrawOp numbered 6) of the render node 6. The draw operation (namely, RenderNodeDrawOp numbered 7) of the render node 7 includes a draw operation (namely, RenderNodeDrawOp numbered 8) of the render node 8. The draw operation (namely, RenderNodeDrawOp numbered 8) of the render node 8 includes a draw operation (namely, RenderNodeDrawOp numbered 9) of the render node 9.

Based on this, when updating the render node 2, the main thread needs to find the render node 1 from the render node 0, and then can find the render node 2 from the render node 1, and update node information of the render node 2. Similarly, when deleting the render node 8, the main thread needs to find the render node 7 from the render node 0, and then can delete the render node 8 from the render node 7.

Optionally, in the process in which the main thread updates the unified render tree, a changed render node and all upper-level render nodes of the changed render node may be further marked for subsequent processing. The updated unified render tree shown in (b) in FIG. 8 is used as an example. The main thread may mark a render node 2, an upper-level render node 1 and an upper-level render node 0 of the render node 2, and a render node 7. The main thread does not mark a deleted render node. For example, the main thread does not mark the render node 8 or the render node 9.

It should be noted that, in a render tree (including the unified render tree), a call interface of a child node is in a parent node. Therefore, to find a changed render node in a process of traversing render nodes, the main thread needs to mark all higher-level render nodes of the changed render node.

(2) Generate a draw command list based on the updated unified render tree.

In some embodiments, the main thread traverses the render nodes to use each render node as a draw operation, to copy the draw operation into the draw command list (DrawCmdList) of the unified render tree. In other words, the main thread performs a full traversal on the unified render tree, to generate a full draw command list of the unified render tree. It may be understood that a full traversal process is time-consuming, and there are a large quantity of draw operations in the full draw command list. Consequently, a draw process of a subsequent image frame is also time-consuming.

In some other embodiments, the main thread traverses the updated unified render tree by using a dirty region stack technology, and completes dirty region (dirty region) calculation and copying of a dirty region draw operation through one traversal, to generate an incremental draw command list.

That the main thread performs dirty region calculation means that the main thread determines a render node that needs to be re-drawn due to a change in the unified render tree. The updated unified render tree shown in (b) in FIG. 8 is used as an example. The main thread determines, through dirty region calculation, that a dirty region of the main thread includes the render node 2 and the render node 7. The render node 7 becomes a dirty region because the render node 7 needs to be re-drawn due to a loss of child nodes (namely, the render node 8 and the render node 9).

In addition, the copying of the dirty region draw operation includes: copying a draw operation corresponding to a dirty region into the draw command list. The update process shown in FIG. 7 is used as an example. Because only background of the render node 2 needs to be re-drawn, the main thread copies an updated background draw command list (background DrawOp List) of the render node 2 into the draw command list of the main thread. In addition, because the render node 7 loses the child nodes and is re-exposed on an image frame, the entire render node 7 is copied as a draw operation into the draw command list of the main thread.

It should be noted that, generally, in a unified rendering process, render nodes of a unified render tree are directly traversed to draw an image frame. However, in this embodiment, to implement parallel running of the main thread and the render thread, a render node that needs to be re-drawn needs to be copied. For example, the entire render node is copied into the draw command list. It may be understood that after the entire render node is copied into the draw command list, subsequent running of the render thread no longer depends on the unified render tree, and even if all the render nodes in the unified render tree are modified, the render thread can still run normally.

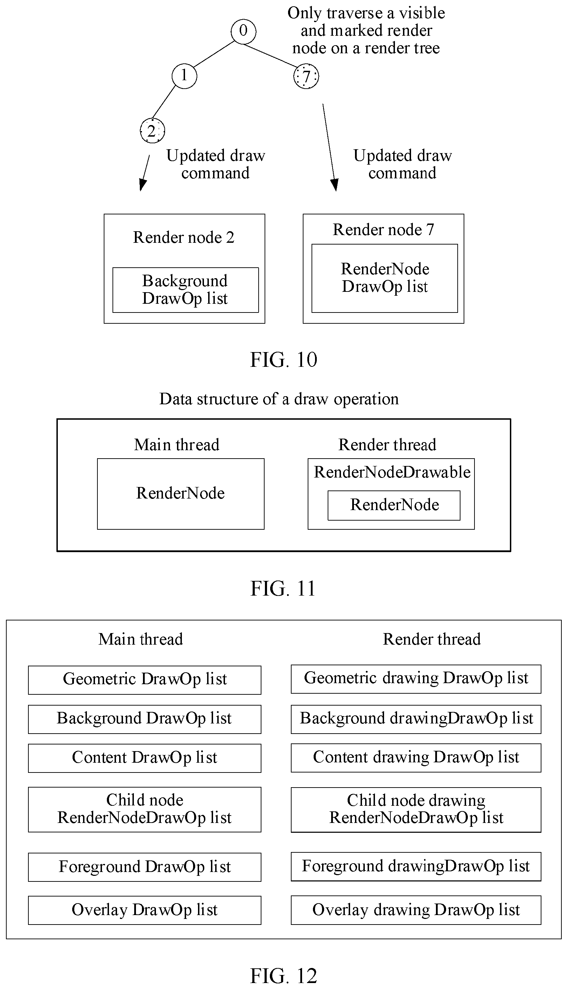

Optionally, to improve efficiency of generating the draw command list by the main thread, the main thread may traverse only marked render nodes, to generate the draw command list. For example, for the updated unified render tree shown in (b) in FIG. 8, marked render nodes of the unified render tree are shown in FIG. 10, and include the render node 0, the render node 1, the render node 2, and the render node 7. Therefore, the main thread only needs to traverse the render nodes in FIG. 10 to generate the draw command list.

It should be noted that, in the foregoing process, the marked render node is used to determine a render node that undergoes an incremental change, for example, a newly added render node, a render node whose attribute information or draw operation is changed, or a render node whose animation step information is changed, and does not include a deleted render node. Therefore, the foregoing process of traversing the marked render nodes may also be referred to as an incremental traversal process. Similarly, the foregoing list that includes only the dirty region draw operation may also be referred to as the incremental draw command list.

It may be understood that, in the incremental traversal process, efficiency of generating the draw command list can be improved, occupation of CPU resources can be reduced, and a load gain, for example, a load gain of 5%, can be obtained.

### 2. Render thread of UniRender

In this embodiment, the render thread of UniRender is mainly configured to draw an image frame based on a draw command list from the main thread, and send the image frame for display. The following content (3) and (4) are specifically included.

(3) Draw the image frame based on the draw command list from the main thread.

First, after generating a draw command list of a unified render tree, the main thread needs to synchronize the draw command list with the render thread. For example, the main thread copies the draw command list and sends the draw command list to the render thread; or the main thread sends address information of the draw command list to the render thread; or the main thread transfers a pointer of an address of the draw command list to the render thread, so that the render thread invokes the draw command list. Compared with a manner in which the draw command list or the address information of the draw command list is copied and then sent to the render thread, time consumed in a data transfer manner in which the pointer is transferred is only time consumed for pointer assignment, and a process of the data transfer manner is more convenient and efficient.

It should be noted that, in the main thread and the render thread of UniRender, data structures of draw operations are different. For example, as shown in FIG. 11, the data structure operated by the main thread is RenderNode, namely, a render node, and the data structure operated by the render thread is RenderNodeDrawable, namely, a drawable render node. In other words, RenderNodeDrawable includes RenderNode information. Alternatively, RenderNodeDrawable holds a strong reference to RenderNode.

Refer to FIG. 12. In RenderNode of the main thread, the data structure of the draw operation is a DrawOp list, and the DrawOp list includes a draw operation that needs to be performed to draw a view, for example, an operation of drawing a circle, a line, or a direction, but does not include attribute information such as a size, a color, and transparency of the view. For example, the DrawOp list includes a plurality of types of draw operations such as a geometric DrawOp list, a background DrawOp list, a content DrawOp list, a child node RenderNodeDrawOp list, a foreground DrawOp list, and an overlay (Overlay) DrawOp list.

Refer to FIG. 12. In RenderNodeDrawable of the render thread, the data structure of the draw operation is a drawing DrawOp list. Compared with the DrawOp list, the drawing DrawOp list may be understood as adding, based on the draw operation of the view, the attribute information such as the size, the color, and the transparency of the view. For example, the drawing DrawOp list includes a plurality of types such as a geometric drawing DrawOp list, a background drawing DrawOp list, a content drawing DrawOp list, a child node drawing RenderNodeDrawOp list, a foreground drawing DrawOp list, and an overlay drawing DrawOp list.

Therefore, after receiving the draw command list, the render thread needs to perform draw element preparation on a draw operation DrawOp list of each render node based on the node information of each render node in the draw command list (that is, prepare attribute information of the render node), to generate a corresponding drawing DrawOp list.

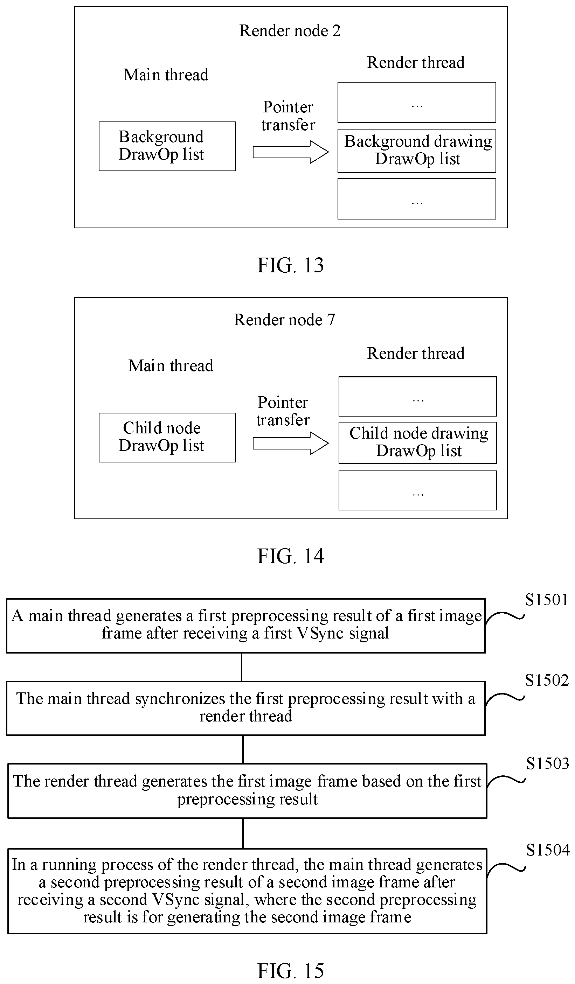

For example, as shown in FIG. 13, after the main thread sends an entire render node 2 as a draw operation to the render thread, the render thread converts a background DrawOp list in the render node 2 into a background drawing DrawOp list with reference to attribute information of the render node 2.

For example, as shown in FIG. 14, after the main thread sends an entire render node 7 as a draw operation to the render thread, the render thread converts a child node RenderNodeDrawOp list in the render node 7 into a child node drawing RenderNodeDrawOp list with reference to attribute information of the render node 7.

Then, the render thread traverses each draw operation in the draw command list, to generate a draw result. For ease of description, in this embodiment, a result obtained through drawing based on an incremental draw command list is referred to as an incremental draw result or a dirty region draw result. For example, the render thread traverses draw operations of the render node 2 to change a background color of a view of the render node 2; or traverses draw operations of the render node 7 to re-generate a draw result of a view of the render node 7.

Finally, the render thread generates a current image frame based on a draw result (referred to as a draw result of a previous frame) of a previous image frame and an incremental draw result obtained this time. For example, because a current draw result is a draw result of a dirty region, the render thread may replace a corresponding part in the draw result of the previous frame with the draw result obtained this time, to obtain a draw result of the current image frame. For example, a draw result of the render node 2 in the draw result of the previous frame is replaced with a draw result of the render node 2 obtained this time, and a draw result of the render node 7 in the draw result of the previous frame is replaced with a draw result of the render node 7 obtained this time, to obtain the draw result of the current image frame.

(4) The render thread sends the image frame for display.

The render thread stores a bitmap of the image frame in a frame buffer, and a DSS may obtain the image frame from the frame buffer to obtain the bitmap, and display the image frame on a screen based on the bitmap.

It should be noted that, the tasks specifically executed by the main thread and the render thread of UniRender are not limited in embodiments. In other words, the preprocessing result sent by the main thread of UniRender to the render thread is not limited in embodiments. Therefore, the main thread and the render thread of UniRender may be further configured to perform the following operations.

In some embodiments, the main thread of UniRender is configured to perform the foregoing process (1), to be specific, updating the unified render tree based on the application message, and sending the updated unified render tree to the render thread. The render thread is configured to perform the foregoing processes (2) to (4), to be specific, generating the draw command list (for example, the full draw command list or the incremental draw command list) based on the updated unified render tree, drawing the image frame based on the draw command list, and sending the image frame for display.

In some other embodiments, the main thread of UniRender is configured to perform the foregoing process (1), to be specific, updating the unified render tree based on the application message, and sending the updated unified render tree to the render thread. The render thread directly traverses the updated unified render tree to generate the image frame, and sends the image frame for display.

After the main thread and the render thread of UniRender are described, the following describes an example of a process in which an electronic device runs the main thread and the render thread in parallel to generate an image frame.

FIG. 15 is a schematic flowchart of an image frame generation method according to an embodiment of this application. For example, UniRender generates a first image frame and a second image frame. The method specifically includes the following steps S1501 to S1504.

S1501: A main thread generates a first preprocessing result of the first image frame after receiving a first VSync signal.

In some embodiments, the first preprocessing result is a unified render tree of the first image frame.

In some other embodiments, the first preprocessing result is a first draw command list of the first image frame. The first draw command list may be a full draw command list, or may be an incremental draw command list. This is not limited in embodiments. The incremental draw command list includes a draw command of a newly added render node in the unified render tree of the first image frame, and/or a draw command of a render node whose information is changed. The full draw command list includes draw commands of all render nodes in the unified render tree of the first image frame, where the unified render tree is a render tree obtained by combining render trees of all applications on which unified rendering is performed.

S1502: The main thread synchronizes the first preprocessing result with a render thread.

In some embodiments, the main thread sends the first preprocessing result to the render thread.

In some other embodiments, the main thread sends address information of the first preprocessing result to the render thread, where the address information is for accessing the first preprocessing result.

In some other embodiments, the main thread transfers a pointer of the first preprocessing result from the main thread to the render thread. It may be understood that time consumed in a data transfer manner in which the pointer is transferred is only time consumed for pointer assignment, and a process of the data transfer manner is more convenient and efficient.

S1503: The render thread generates the first image frame based on the first preprocessing result.

It should be noted that for a same image frame (for example, the first image frame), the main thread needs to first generate the preprocessing result of the image frame, and then the render thread can generate the image frame based on the preprocessing result. Therefore, the main thread and the render thread cannot run in parallel when generating the same image frame.

S1504: In a running process of the render thread, the main thread generates a second preprocessing result of the second image frame after receiving a second VSync signal, where the second preprocessing result is for generating the second image frame.

In the foregoing process, after generating the first preprocessing result of the first image frame, the main thread processes the second preprocessing result of the second image frame in serial. Therefore, the second preprocessing result may affect or override the first preprocessing result. Therefore, to ensure that the main thread and the render thread run in parallel, the main thread needs to send the first preprocessing result to the render thread, to prevent the main thread from changing the first preprocessing result in a process of processing the second image frame.

For example, the main thread can start to generate a second draw command list of the second image frame only after sending the first draw command list of the first image frame to the render thread, to prevent the first draw command list from being changed by the main thread in a process in which the render thread invokes the first draw command list. Alternatively, the main thread can start to update the unified render tree based on the second image frame only after sending the unified render tree of the first image frame to the render thread, to prevent the unified render tree from being changed by the main thread in a process in which the render thread uses the unified render tree.

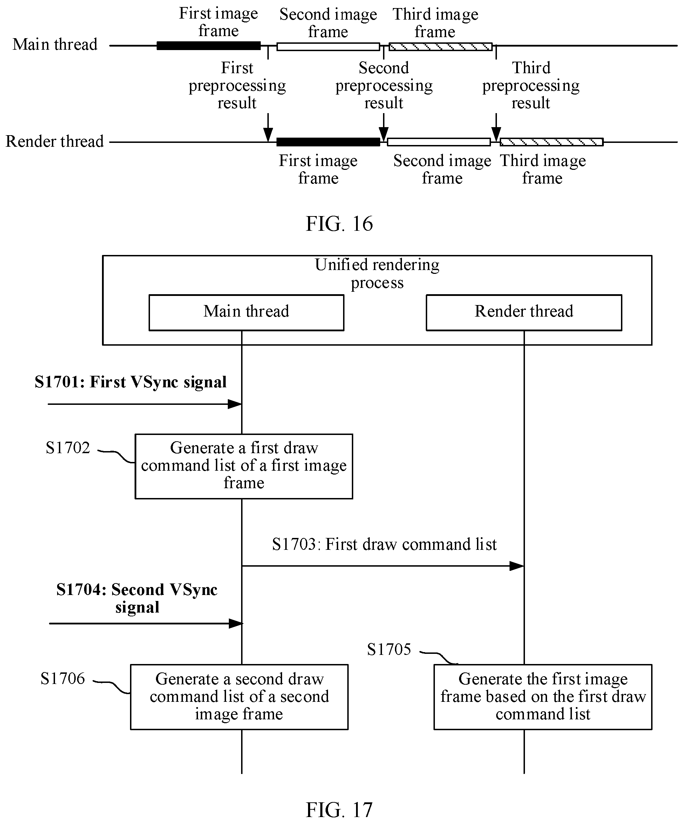

In this embodiment, refer to FIG. 16. The main thread can preprocess, in serial, image frames that wait for being drawn in sequence, for example, the first image frame, the second image frame, a third image frame, ..., to obtain corresponding preprocessing results, for example, the first preprocessing result, the second preprocessing result, a third preprocessing result, ..., and synchronize the preprocessing results with the render thread. The render thread can receive the preprocessing results in serial, and generate the corresponding image frames based on the preprocessing results. For example, the render thread generates the first image frame based on the first preprocessing result, generates the second image frame based on the second preprocessing result, and generates the third image frame based on the third preprocessing result.

In the foregoing process, it can be learned that the main thread and the render thread run in parallel when processing different image frames. For example, a process in which the main thread processes the second image frame and a process in which the render thread processes the first image frame are run in parallel. Therefore, according to the method provided in this embodiment, a rate of generating an image frame can be increased, and frame dropping or jank in a display process of an electronic device can be reduced, thereby improving user experience.

In a process in which UniRender generates an image frame in parallel by using the main thread and the render thread, the render thread may start to run at different occasions. For example, the render thread may start to run after receiving a VSync signal and obtaining the draw command list through synchronization from the main thread, or the render thread may immediately start to run after obtaining the draw command list through synchronization from the main thread.

The following specifically describes the foregoing two image frame generation methods by using an example in which the preprocessing result sent by the main thread to the render thread is the draw command list.

### (1) The render thread starts to run after receiving the VSync signal

In this embodiment, as shown in Table 1, the main thread of UniRender starts to run after receiving the VSync signal, and the render thread works after obtaining the draw command list through synchronization from the main thread and receiving the VSync signal.

Table 1

| Name | Running occasion |
|---|---|
| Main thread | After the VSync signal is received |
| Render thread | After the draw command list is obtained through synchronization from the main thread and the VSync signal is received |

FIG. 17 is a schematic flowchart of an image frame generation method according to another embodiment of this application. The method specifically includes the following steps S1701 to S1706.

S1701: A main thread receives a first VSync signal.

S1702: The main thread generates a first draw command list of a first image frame in response to the first VSync signal.

For example, the first draw command list is an incremental draw command list, and that the main thread generates the first draw command list includes: The main thread updates a unified render tree, traverses the updated unified render tree to determine a dirty region, and generates an incremental draw command list corresponding to the dirty region. The incremental draw command list is the first draw command list.

S1703: The main thread synchronizes the first draw command list with a render thread.

For example, the main thread transfers a pointer of the first draw command list to the render thread.

S1704: The render thread and the thread receive a second VSync signal.

It should be noted that the first VSync signal and the second VSync signal are VSync signals sent at a fixed frequency. In other words, the first VSync signal and the second VSync signal have same content but different sending time.

S1705: The render thread generates the first image frame based on the first draw command list in response to the second VSync signal.

In this embodiment, both the main thread and the render thread are started and run by using a VSync signal, so that impact of the main thread on the render thread can be reduced, thereby improving running independence of the main thread and the render thread.

S1706: In response to the second VSync signal, the main thread generates a second draw command list of a second image frame while the render thread generates the first image frame based on the first draw command list, where the second draw command list is for generating the second image frame.

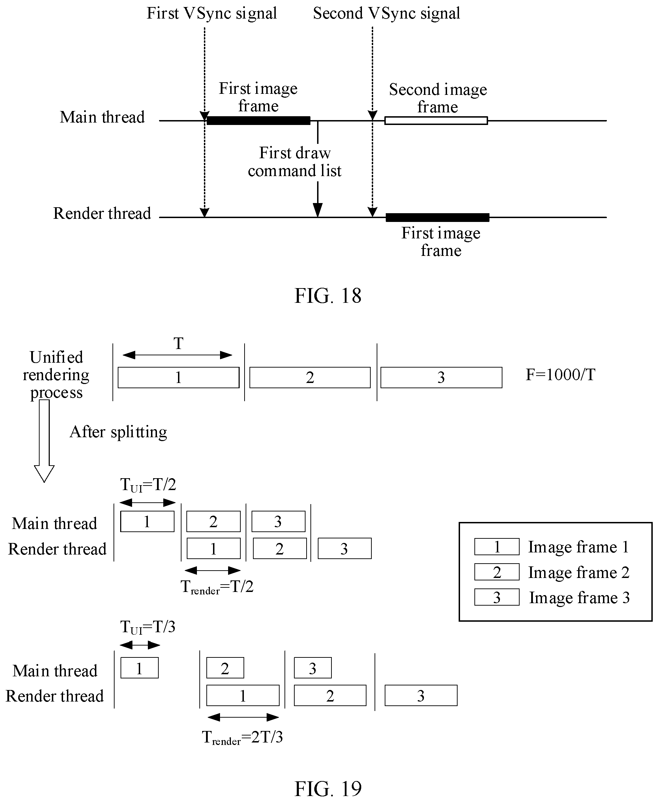

It should be noted that the first image frame and the second image frame are two image frames that need to be continuously drawn by an electronic device, and the first image frame is drawn before the second image frame. Therefore, refer to FIG. 18. After the main thread hands over the first draw command list of the first image frame to the render thread for processing, in a process in which the render thread draws the first image frame based on the first draw command list, the main thread may generate the second draw command list of the second image frame in parallel, so that efficiency of generating an image frame is improved, and frame dropping or jank in a display process of the electronic device is reduced, thereby improving user experience.

In this embodiment, refer to FIG. 19. Assuming that time consumed for generating a single image frame by UniRender is constant, and is T (ms), a maximum frame rate supported when UniRender generates the image frame in serial is $F_{max1} = 1000/T$.

After UniRender is split into the main thread and the render thread, when the main thread and the render thread run in parallel, a maximum frame rate $F_{max2}$ supported by UniRender satisfies the following Formula (1) and Formula (2).

$$T_{UI} + T_{render} = T \qquad\qquad (1)$$

$$F_{max2} = \frac{1000}{T - \min(T_{UI}, T_{render})} \quad \text{or} \quad F_{max2} = \frac{1000}{\max(T_{UI}, T_{render})} \qquad (2)$$

T is the time consumed for generating the single image frame by UniRender, $T_{UI}$ is time consumed for processing the image frame by the main thread of UniRender, and $T_{render}$ is time consumed for processing the image frame by the render thread of UniRender. In addition, $\min(T_{UI}, T_{render})$ represents a smaller value in $T_{UI}$ and $T_{render}$. $\text{man}(T_{UI}, T_{render})$ represents a larger value in $T_{UI}$ and $T_{render}$.

It can be learned by solving Formula (1) and Formula (2) in combination that:

When $T_{UI} = T_{render} = T/2$, the main thread and the render thread have a highest degree of parallelism.

Through calculation, the maximum frame rate $F_{max2} = 2000/T$ supported after UniRender is split is twice the maximum frame rate $F_{max1}$ supported before UniRender is split, so that a rate of generating an image frame by the electronic device can be significantly increased.

When $T_{UI} = T/3$ and $T_{render} = 2T/3$, the main thread and the render thread may partially run in parallel.

Through calculation, the maximum frame rate $F_{max2} = 1500/T$ supported after UniRender is split is 1.5 times the maximum frame rate $F_{max1}$ supported before UniRender is split, and a rate of generating an image frame by the electronic device can also be increased.

**(2) The render thread starts to run after obtaining the draw command list through synchronization from the main thread**

In this embodiment, as shown in Table 2, the main thread of UniRender starts to run after receiving the VSync signal, and the render thread works after obtaining the draw command list through synchronization from the main thread, without waiting for the VSync signal.

Table 2

| Name | Running occasion |
|---|---|
| Main thread | After the VSync signal is received |
| Render thread | After obtaining the draw command list through synchronization from the main thread |

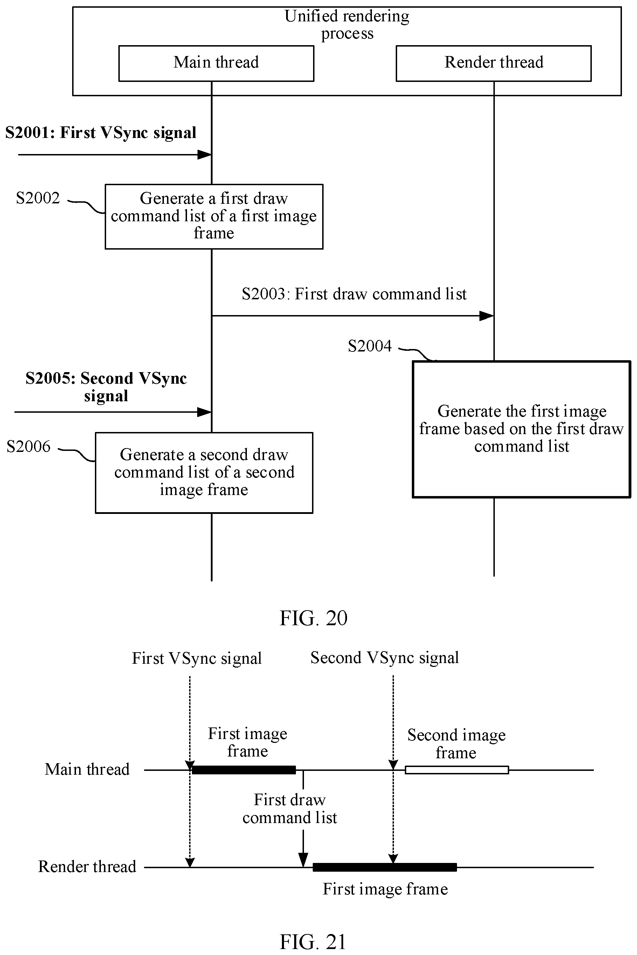

FIG. 20 is a schematic flowchart of an image frame generation method according to still another embodiment of this application. The method specifically includes the following steps S2001 to S2006.

S2001: A main thread receives a first VSync signal.

S2002: The main thread generates a first draw command list of a first image frame in response to the first VSync signal.

S2003: The main thread synchronizes the first draw command list with a render thread.

For example, the main thread transfers a pointer of the first draw command list to the render thread.

S2004: The render thread generates the first image frame based on the first draw command list.

S2005: The main thread receives a second VSync signal.

S2006: The main thread generates a second draw command list of a second image frame in response to the second VSync signal, where the second draw command list is for generating the second image frame.

For S2005 and S2006, it should be noted that, when the main thread finishes processing the first image frame, a next VSync signal (namely, the second VSync signal) after the first VSync signal usually does not arrive. Therefore, the main thread needs to wait for the second VSync signal in a process in which the render thread generates the first image frame. After the second VSync signal arrives, the main thread can start to generate the second image frame.

In this embodiment, refer to FIG. 21. The main thread may quickly start the render thread based on the first draw command list to run, so that efficiency of generating an image frame is improved.

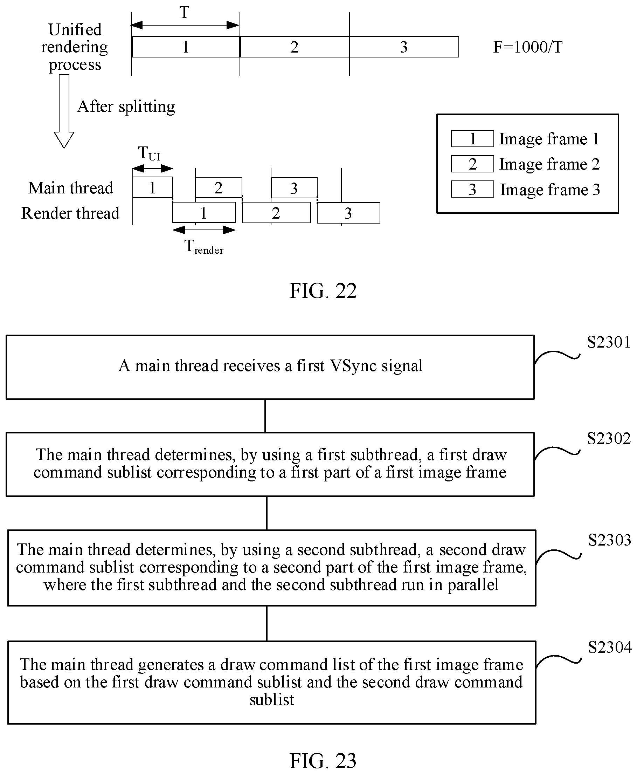

In this embodiment, refer to FIG. 22. Assuming that time consumed for generating a single image frame by UniRender is constant, and is T (ms), a maximum frame rate supported when UniRender generates the image frame in serial is $F_{max1} = 1000/T$. After UniRender is split into the main thread and the render thread, because the main thread and the render thread run in parallel, a rendering period of UniRender is greater than $\max(T_{UI}, T_{render}$ but less than T. In addition, when $T_{UI} = T_{render} = T/2$, a maximum frame rate $F_{max2}$ after UniRender is split can also reach $F_{max2} = 2000/T$. Therefore, the method provided in this embodiment can significantly improve efficiency of generating an image frame.

To further improve the efficiency of generating an image frame, the main thread may work in parallel by using a plurality of subthreads, to quickly generate a draw command list. For example, the main thread may generate draw command sublists of different foreground applications in parallel by using the plurality of subthreads, and combine these draw command sublists to obtain the first draw command list of the first image frame. Details are described below.

FIG. 23 is a schematic flowchart of generating a first draw command list by a main thread according to an embodiment of this application. For example, the main thread includes a first subthread and a second subthread that run in parallel. The procedure specifically includes the following steps S2301 to S2304.

S2301: The main thread receives a first VSync signal.

S2302: The main thread determines, by using the first subthread, a first draw command sublist corresponding to a first part of a first image frame.

S2303: The main thread determines, by using the second subthread, a second draw command sublist corresponding to a second part of the first image frame, where the first subthread and the second subthread run in parallel.

S2304: The main thread generates the first draw command list of the first image frame based on the first draw command sublist and the second draw command sublist. For example, the main thread may combine the first draw command sublist and the second draw command sublist, to generate the first draw command list of the first image frame.

It should be noted that, in this embodiment, the first draw command list of the first image frame may be a full draw command list, or may be an incremental draw command list. This is not limited in embodiments.

In an example, a process in which the main thread generates the incremental draw command list of the first image frame includes:

First, the main thread updates a unified render tree of the first image frame after receiving the first VSync signal.

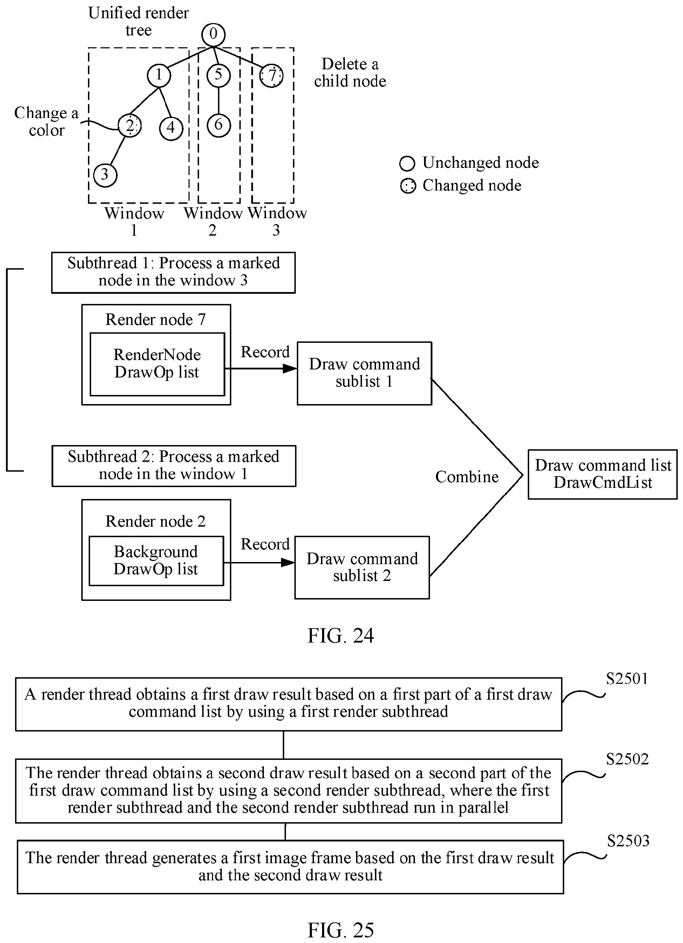

Then, the main thread determines, based on an updated unified render tree, a quantity M of foreground applications whose user interfaces change. For example, the updated unified render tree of the main thread is shown in FIG. 24. A render node 1 to a render node 4 of the unified render tree belong to a window 1, a render node 5 and a render node 6 belong to a window 2, and a render node 7 belongs to a window 3. The main thread determines, through dirty region calculation, that the render node 2 and the render node 7 are dirty regions, and node change information of the render node 2 is changing a background color to a color A. The render node 7 becomes a leaf node because a child node of the render node 7 is deleted. Based on this, in the unified render tree shown in FIG. 24, the main thread determines that there are two windows in which user interfaces change: the window 1 and the window 3. An application 1 corresponds to the window 1, an application 2 corresponds to the window 2, and an application 3 corresponds to the window 3. Therefore, the main thread determines that the quantity M of the foreground applications whose user interfaces change is equal to 2.

Then, the main thread respectively determines, by using M subthreads, draw command sublists corresponding to incremental render nodes in the M foreground applications. The unified render tree shown in FIG. 24 is used as an example. The main thread respectively processes incremental render nodes in the window 1 and the window 3 by using two subthreads. For example, the main thread processes the incremental render node in the window 3 by using a subthread 1. Specifically, the subthread 1 reversely traverses the render node in the window 3 to perform dirty region calculation, determines a dirty region as the render node 7, and copies the entire render node 7 as a draw operation into a draw command sublist 1. In addition, the main thread processes the incremental render node in the window 1 by using a subthread 2. Specifically, the subthread 2 reversely traverses the render node in the window 1 to perform dirty region calculation, and copies a background draw operation of the entire render node 2 into a draw command list.

Finally, the main thread combines the draw command sublists of the M foreground applications into the first draw command list. For example, as shown in FIG. 24, the main thread combines the draw command sublist 1 corresponding to the window 3 and a draw command sublist 2 corresponding to the window 1 into the first draw command list of the entire first image frame.

In conclusion, in the foregoing processes S2301 to S2304, the main thread may work in parallel by using a plurality of subthreads, to generate the draw command list, so that efficiency of generating an image frame is improved.

In addition, the render thread may also work in parallel by using a plurality of render subthreads, to quickly complete a draw operation in the draw command list, and generate an image frame. A process in which the render thread generates the first image frame based on the first draw command list of the first image frame is used as an example. The method is specifically as follows.

FIG. 25 is a flowchart of generating a first image frame by a render thread based on a first draw command list according to an embodiment of this application. The procedure specifically includes the following steps S2501 to S2503.

S2501: The render thread obtains a first draw result based on a first part of the first draw command list by using a first render subthread.

S2502: The render thread obtains a second draw result based on a second part of the first draw command list by using a second render subthread, where the first render subthread and the second render subthread run in parallel.

In some embodiments, the first part of the first draw command list may be a first draw command sublist in a main thread, and the second part may be a second draw command sublist in the main thread.

In some other embodiments, different parts of the first draw command list, for example, the first part and the second part, may be obtained through re-division by the render thread. For example, the render thread may split the first draw command list into N parts based on a quantity N of FBOs.

S2503: The render thread generates the first image frame based on the first draw result and the second draw result.

In this embodiment, the render thread may split the first draw command list into N sublists, for example, the first part and the second part, based on the quantity of FBOs. Then, the render thread respectively processes different sublists of the first draw command list by using N render subthreads, for example, the first render subthread and the second render subthread, to finally obtain the first image frame.

It should be noted that the FBO is a mechanism for rendering to texture or a plurality of render targets, and may be understood as a container. The FBO provides a flexible manner to perform operations such as off-screen rendering, post-processing, and rendering to texture.

In an example, the render thread processes the first draw command list in parallel by using a plurality of render subthreads, and a process of generating the first image frame includes the following content.

First, the render thread may create N FBOs, and split the first draw command list into the N sublists, to separately perform off-screen rendering. For example, N=3. The render thread may split the first draw command list into a sublist 1 to a sublist 3. The sublist 1 to the sublist 3 are respectively FBO1 DrawCmdList, FBO2 DrawCmdList, and FBO3 DrawCmdList.

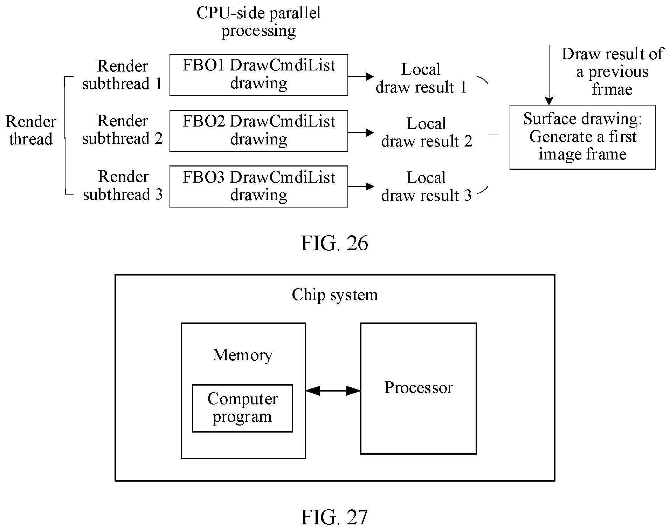

Then, the render thread processes the N sublists in parallel by using the N render subthreads, to obtain N local draw results. For example, as shown in FIG. 26, the render thread draws FBO1 DrawCmdList by using a render subthread 1, to obtain a draw result 1; the render thread draws FBO1 DrawCmdList by using a render subthread 2, to obtain a draw result 2; and the render thread draws FBO1 DrawCmdList by using a render subthread 3, to obtain a draw result 3.

Finally, the render thread generates the corresponding first image frame based on the N local draw results and a draw result of a previous frame. For example, the render thread generates the first image frame based on the draw result 1, the draw result 2, and the draw result 3.

In some embodiments, if the first draw command list is a full draw command list, the render thread may generate the first image frame based on the N local draw results.

In some other embodiments, if the first draw command list is an incremental draw command list, the render thread needs to generate the first image frame based on the N local draw results and the draw result of the previous frame. The draw result of the previous frame is a draw result of a previous image frame. The render thread may obtain the first image frame by replacing a corresponding part in the draw result of the previous frame with the N local draw results.

In conclusion, in the foregoing processes S2501 to S2503, the render thread may work in parallel by using a plurality of render subthreads, to generate an image frame, so that efficiency of generating an image frame is improved.

It should be understood that, sequence numbers of the steps do not mean an execution sequence in the foregoing embodiments. The execution sequence of the processes should be determined based on functions and internal logic of the processes, and should not constitute any limitation on the implementation processes of embodiments of this application.

An embodiment of this application further provides an electronic device. The electronic device includes one or more processors and a memory. The memory is coupled to the one or more processors. The memory is configured to store computer program code. The computer program code includes computer instructions. The one or more processors invoke the computer instructions, to cause the electronic device to perform the image frame generation method shown in the foregoing embodiments.

An embodiment of this application further provides a chip system. Refer to FIG. 27. The chip includes a processor and a memory. The memory stores a computer program. When the computer program is executed by the processor, the image frame generation method in the foregoing embodiments is implemented.

An embodiment of this application further provides a computer-readable storage medium. The computer-readable storage medium stores a computer program. When the computer program is executed by a processor, the image frame generation method provided in the foregoing embodiments is implemented.

An embodiment of this application further provides a computer program product. The program product includes a computer program. When the computer program is run by an electronic device, the electronic device is caused to implement the image frame generation method provided in the foregoing embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In embodiments provided in this application, division into frameworks or modules is merely logical function division and may be other division during actual implementation. For example, a plurality of frameworks or modules may be combined or integrated into another system, or some features may be ignored or not performed.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

Reference to "an embodiment" or "some embodiments" described in this specification of this application means that one or more embodiments of this application include a specific feature, structure, or feature described with reference to embodiments. Therefore, statements such as "in an embodiment", "in some embodiments", "in some another embodiment", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, a person of ordinary skill in the art should understand that modifications may still be made to the technical solutions described in the foregoing embodiments or equivalent replacements may be made to some technical features thereof without departing from the scope of the technical solutions in embodiments of this application. All modifications and equivalent replacements shall fall within the protection scope of this application.

**Claims**

1. An image frame generation method, applied to an electronic device, wherein a unified rendering process of the electronic device comprises a main thread and a render thread, and the method comprises:

   generating, by the main thread, a first preprocessing result of a first image frame after receiving a first vertical synchronization signal;
   synchronizing, by the main thread, the first preprocessing result with the render thread;
   generating, by the render thread, the first image frame based on the first preprocessing result; and
   in a process in which the render thread generates the first image frame based on the first preprocessing result, generating, by the main thread, a second preprocessing result of a second image frame after receiving a second vertical synchronization signal, wherein the second preprocessing result is for generating the second image frame.

2. The method according to claim 1, wherein the first preprocessing result is a first draw command list of the first image frame, and the first draw command list is an incremental draw command list or a full draw command list;

   the incremental draw command list comprises a draw command of a newly added render node in a unified render tree of the first image frame, and/or a draw command of a render node whose information is changed; and
   the full draw command list comprises draw commands of all render nodes in the unified render tree of the first image frame, wherein the unified render tree is a render tree obtained by combining render trees of all applications on which unified rendering is performed.

3. The method according to claim 2, wherein the first image frame comprises a first part from a first application and a second part from a second application, and the generating, by the main thread, the first preprocessing result of the first image frame after receiving the first vertical synchronization signal comprises:

   after receiving the first vertical synchronization signal, determining, by the main thread by using a first subthread, a first draw command sublist corresponding to the first part;
   after receiving the first vertical synchronization signal, determining, by the main thread by using a second subthread, a second draw command sublist corresponding to the second part, wherein the first subthread and the second subthread run in parallel; and
   generating, by the main thread, the first draw command list of the first image frame based on the first draw command sublist and the second draw command sublist.

4. The method according to claim 2 or 3, wherein the generating, by the render thread, the first image frame based on the first preprocessing result comprises:

   obtaining, by the render thread, a first draw result based on a first part of the first draw command list by using a first render subthread;

obtaining, by the render thread, a second draw result based on a second part of the first draw command list by using a second render subthread, wherein the first render subthread and the second render subthread run in parallel; and

generating, by the render thread, the first image frame based on the first draw result and the second draw result.

5. The method according to claim 4, wherein the generating, by the render thread, the first image frame based on the first draw result and the second draw result comprises:

when the first draw command list is the incremental draw command list, generating, by the render thread, the first image frame based on the first draw result, the second draw result, and a draw result of a previous image frame.

6. The method according to any one of claims 2 to 5, wherein the first draw command list is the incremental draw command list, and the generating, by the main thread, the first preprocessing result of the first image frame after receiving the first vertical synchronization signal comprises:

receiving, by the main thread, node change information of a render tree of at least one application after receiving the first vertical synchronization signal; and

generating, by the main thread, the incremental draw command list of the first image frame based on the node change information.

7. The method according to any one of claims 2 to 5, wherein the first draw command list is the full draw command list, and the generating, by the main thread, the first preprocessing result of the first image frame after receiving the first vertical synchronization signal comprises:

receiving, by the main thread, a render tree of at least one application after receiving the first vertical synchronization signal; and

generating, by the main thread, the full draw command list of the first image frame based on the render tree of the at least one application.

8. The method according to claim 1, wherein the first preprocessing result is a unified render tree of the first image frame, and the unified render tree is a render tree obtained by combining render trees of all applications on which unified rendering is performed.

9. The method according to any one of claims 1 to 8, wherein the generating, by the render thread, the first image frame based on the first preprocessing result comprises:

generating, by the render thread, the first image frame based on the first preprocessing result after receiving the first preprocessing result.

10. The method according to any one of claims 1 to 8, wherein the generating, by the render thread, the first image frame based on the first preprocessing result comprises:

generating, by the render thread, the first image frame based on the first preprocessing result after receiving the second vertical synchronization signal.

11. The method according to any one of claims 1 to 10, wherein the synchronizing, by the main thread, the first preprocessing result with the render thread comprises:

sending, by the main thread, the first preprocessing result to the render thread; or

sending, by the main thread, address information of the first preprocessing result to the render thread, wherein the address information is for accessing the first preprocessing result; or

transferring, by the main thread, a pointer of the first preprocessing result to the render thread.

12. An electronic device, wherein the electronic device comprises one or more processors and a memory;

the memory is coupled to the one or more processors; and

the memory is configured to store computer program code, the computer program code comprises computer instructions, and the one or more processors invoke the computer instructions, to cause the electronic device to perform the method according to any one of claims 1 to 11.

13. A chip system, wherein the chip system is used in an electronic device, the chip system comprises one or more processors, and the processor is configured to invoke computer instructions, to cause the electronic device to perform the method according to any one of claims 1 to 11.

14. A computer-readable storage medium, wherein the computer-readable storage medium stores a computer program, and when the computer program is executed by a processor, the method according to any one of claims 1 to 11 is implemented.

Status bar

Information application

Video application

FIG. 1

Antenna 1                                    Antenna 2

| Mobile communication module 2G/3G/4G/5G [250] | Wireless communication module BT/WLAN/GNSS/NFC/IR/FM [260] |

| Speaker [270A] | Audio module [270] | Processor [210] | Sensor module [280] |

Receiver [270B]

Microphone [270C]

Headset jack [270D]

Pressure sensor [280A]

Gyroscope sensor [280B]

Barometric pressure sensor [280C]

Magnetic sensor [280D]

Display screens 1 to N [294]

Cameras 1 to N [293]

Indicator [292]

Acceleration sensor [280E]

Distance sensor [280F]

Motor [291]

Button [290]

Optical proximity sensor [280G]

Internal memory [221]

Fingerprint sensor [280H]

SIM card interfaces 1 to N [295]

Temperature sensor [280J]

Interface [220] for external memory

Touch sensor [280K]

Ambient light sensor [280L]

USB interface [230]

Charging management module [240]

Power management module [241]

Bone conduction sensor [280M]

Charging input

Battery [242]

FIG. 2

| | | | | | | |
|---|---|---|---|---|---|---|
| Application layer | Camera | Calendar | Map | WLAN | Music | Desktop |
| | Gallery | Call | Navigation | Bluetooth | Video | |

Application frame layer

View system

Visual control

Render service render service

Unified rendering process UniRender

Surface flinger SurfaceFlinger

Window management service

Content provider

Display management service

Phone manager

Notification manager

System library

Surface manager

Media library

Graphics processing library

Kernel layer

DSS

Display driver

Camera driver

Sensor driver

Audio driver

FIG. 3

**Application 1**  **Application 2**  **Application 3**  **Application 4**

**(1)** Render tree 1   Render tree 2   Render tree 3   Render tree 4

UniRender of RenderService

New root render node

**(2)**

**(3)**

Unified buffer

Render tree 1   Render tree 2   Render tree 3   Render tree 4

Unified render tree

**(4)**

DSS

FIG. 4

Vsync signal

Vsync signal

Vsync signal

| Generate a unified render tree | Generate an image frame | Send for display | Generate a unified render tree | Generate an image frame | Send for display |

8.3 ms   8.3 ms

Jank

FIG. 5

Unified rendering process

| Main thread | Preprocessing result | Render thread |
|---|---|---|
| Preprocess information | → | Draw an image frame based on the preprocessing result | Send for display |

FIG. 6

Unified rendering process

| Main thread | Draw command list | Render thread |
|---|---|---|
| (1) Update a unified render tree | (2) Generate a draw command list | → | (3) Draw an image frame | (4) Send for display |

FIG. 7

(2) Change a color
(8) Delete a node
(9) Change a scale

○ Unchanged node
⊙ Changed node

(a)                                        (b)

FIG. 8

| RenderNodeDrawOp numbered 0 | | | | |
|---|---|---|---|---|
| | Numbered 1 | Numbered 5 | Numbered 7 | |
| DrawOp | RenderNodeDrawOp | RenderNodeDrawOp | RenderNodeDrawOp | ... |

| RenderNodeDrawOp numbered 1 | | | |
|---|---|---|---|
| ... | RenderNodeDrawOp numbered 2 | RenderNodeDrawOp numbered 4 | ... |

| RenderNodeDrawOp numbered 7 | | |
|---|---|---|
| ... | RenderNodeDrawOp numbered 8 | ... |

| RenderNodeDrawOp numbered 2 | | | | |
|---|---|---|---|---|
| ... | Background DrawOp list | ... | RenderNodeDrawOp numbered 3 | ... |

FIG. 9

Only traverse a visible
and marked render
node on a render tree

Updated draw
command

Updated draw
command

Render node 2

Background
DrawOp list

Render node 7

RenderNode
DrawOp list

FIG. 10

Data structure of a draw operation

| Main thread | Render thread |
|---|---|
| RenderNode | RenderNodeDrawable<br><br>RenderNode |

FIG. 11

| Main thread | Render thread |
|---|---|
| Geometric DrawOp list | Geometric drawing DrawOp list |
| Background DrawOp list | Background drawingDrawOp list |
| Content DrawOp list | Content drawing DrawOp list |
| Child node RenderNodeDrawOp list | Child node drawing RenderNodeDrawOp list |
| Foreground DrawOp list | Foreground drawingDrawOp list |
| Overlay DrawOp list | Overlay drawing DrawOp list |

FIG. 12

Render node 2

Main thread

Render thread

Pointer transfer

Background DrawOp list

→

... 

Background drawing DrawOp list

...

## FIG. 13

Render node 7

Main thread

Render thread

Pointer transfer

Child node DrawOp list

→

...

Child node drawing DrawOp list

...

## FIG. 14

A main thread generates a first preprocessing result of a first image frame after receiving a first VSync signal — S1501

The main thread synchronizes the first preprocessing result with a render thread — S1502

The render thread generates the first image frame based on the first preprocessing result — S1503

In a running process of the render thread, the main thread generates a second preprocessing result of a second image frame after receiving a second VSync signal, where the second preprocessing result is for generating the second image frame — S1504

## FIG. 15

Main thread

First image
frame
Second image
frame
Third image
frame

First
preprocessing
result
Second
preprocessing
result
Third
preprocessing
result

Render thread

First image
frame
Second image
frame
Third image
frame

FIG. 16

Unified rendering
process

Main thread          Render thread

**S1701: First VSync signal**

S1702 — Generate a first draw
command list of a first image
frame

S1703: First draw command list

**S1704: Second VSync
signal**

S1705 —

S1706 — Generate a second draw
command list of a second
image frame

Generate the first image
frame based on the first draw
command list

FIG. 17

First VSync signal          Second VSync signal

First image
frame

Main thread

Second image
frame

First draw
command list

Render thread

First image
frame

**FIG. 18**

Unified
rendering
process

T

| 1 | 2 | 3 |

$F=1000/T$

After splitting

$T_{UI}=T/2$

Main thread

| 1 | 2 | 3 |

Render thread

| 1 | 2 | 3 |

$T_{render}=T/2$

| 1 | Image frame 1 |
| 2 | Image frame 2 |
| 3 | Image frame 3 |

$T_{UI}=T/3$

Main thread

| 1 | 2 | 3 |

Render thread

| 1 | 2 | 3 |

$T_{render}=2T/3$

**FIG. 19**

Unified rendering
process

| Main thread | Render thread |

**S2001: First VSync signal**

S2002 — Generate a first draw command list of a first image frame

S2003: First draw command list

S2004 — Generate the first image frame based on the first draw command list

**S2005: Second VSync signal**

S2006 — Generate a second draw command list of a second image frame

FIG. 20

First VSync signal        Second VSync signal

First image
frame                          Second image
frame

Main thread

First draw
command list

Render thread

First image frame

FIG. 21

Unified
rendering
process

T

| 1 | 2 | 3 |

F=1000/T

After splitting

$T_{UI}$

Main thread | 1 | 2 | 3 |
Render thread | 1 | 2 | 3 |

$T_{render}$

| 1 | Image frame 1 |
| 2 | Image frame 2 |
| 3 | Image frame 3 |

FIG. 22

A main thread receives a first VSync signal — S2301

The main thread determines, by using a first subthread, a first draw command sublist corresponding to a first part of a first image frame — S2302

The main thread determines, by using a second subthread, a second draw command sublist corresponding to a second part of the first image frame, where the first subthread and the second subthread run in parallel — S2303

The main thread generates a draw command list of the first image frame based on the first draw command sublist and the second draw command sublist — S2304

FIG. 23

Unified render
tree

Change a
color

Window
1

Window
2

Window
3

Delete a
child node

○ Unchanged node
⊙ Changed node

Subthread 1: Process a marked
node in the window 3

Render node 7

RenderNode
DrawOp list

Record → Draw command
sublist 1

Subthread 2: Process a marked
node in the window 1

Render node 2

Background
DrawOp list

Record → Draw command
sublist 2

Combine

Draw command list
DrawCmdList

**FIG. 24**

A render thread obtains a first draw result based on a first part of a first draw
command list by using a first render subthread

S2501

The render thread obtains a second draw result based on a second part of the
first draw command list by using a second render subthread, where the first
render subthread and the second render subthread run in parallel

S2502

The render thread generates a first image frame based on the first draw result
and the second draw result

S2503

**FIG. 25**

CPU-side parallel
processing

Render
thread

Render
subthread 1

Render
subthread 2

Render
subthread 3

FBO1 DrawCmdiList
drawing

FBO2 DrawCmdiList
drawing

FBO3 DrawCmdiList
drawing

Local
draw result 1

Local
draw result 2

Local
draw result 3

Draw result of
a previous
frmae

Surface drawing:
Generate a first
image frame

FIG. 26

Chip system

Memory

Computer
program

Processor

FIG. 27

## INTERNATIONAL SEARCH REPORT

| International application No. |
|---|
| **PCT/CN2025/080059** |

| A. | CLASSIFICATION OF SUBJECT MATTER |
|---|---|

G06F3/14(2006.01)i

According to International Patent Classification (IPC) or to both national classification and IPC

| B. | FIELDS SEARCHED |
|---|---|

Minimum documentation searched (classification system followed by classification symbols)

    IPC：G06F

Documentation searched other than minimum documentation to the extent that such documents are included in the fields searched

Electronic data base consulted during the international search (name of data base and, where practicable, search terms used)

    CNTXT, ENTXTC, DWPI: 华为, 图像帧, 渲染进程, 渲染线程, 主线程, 垂直同步信号, 掉帧, 卡频, 节点,, image frame, rendering thread, main thread, vertical synchronous signal, dropping, blocking, node

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 119512484 A (HUAWEI TECHNOLOGIES CO., LTD.) 25 February 2025 (2025-02-25) claims 1-14 | 1-14 |
| X | CN 115048012 A (HONOR DEVICE CO., LTD.) 13 September 2022 (2022-09-13) description, paragraphs 0197-0210, and figure 8 | 1-14 |
| A | CN 115994007 A (HUAWEI TECHNOLOGIES CO., LTD.) 21 April 2023 (2023-04-21) entire document | 1-14 |
| A | CN 113986002 A (HONOR DEVICE CO., LTD.) 28 January 2022 (2022-01-28) entire document | 1-14 |
| A | CN 117934768 A (BEIJING UNISOC COMMUNICATION TECHNOLOGY CO., LTD.) 26 April 2024 (2024-04-26) entire document | 1-14 |
| A | US 2013328898 A1 (APPLE INC.) 12 December 2013 (2013-12-12) entire document | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"   later document published after the international filing date or priority date and not in conflict with the application but cited to understand the principle or theory underlying the invention

"X"   document of particular relevance; the claimed invention cannot be considered novel or cannot be considered to involve an inventive step when the document is taken alone

"Y"   document of particular relevance; the claimed invention cannot be considered to involve an inventive step when the document is combined with one or more other such documents, such combination being obvious to a person skilled in the art

"&"   document member of the same patent family

| Date of the actual completion of the international search | Date of mailing of the international search report |
|---|---|
| **15 April 2025** | **21 April 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2025/080059**

| Patent document cited in search report | | | Publication date (day/month/year) | Patent family member(s) | | | Publication date (day/month/year) |
|---|---|---|---|---|---|---|---|
| CN | 119512484 | A | 25 February 2025 | None | | | |
| CN | 115048012 | A | 13 September 2022 | CN | 115048012 | B | 25 April 2023 |
| CN | 115994007 | A | 21 April 2023 | WO | 2023066177 | A1 | 27 April 2023 |
| | | | | EP | 4390677 | A1 | 26 June 2024 |
| | | | | US | 2024404157 | A1 | 05 December 2024 |
| | | | | CN | 115994007 | B | 11 February 2025 |
| CN | 113986002 | A | 28 January 2022 | CN | 113986002 | B | 17 June 2022 |
| CN | 117934768 | A | 26 April 2024 | None | | | |
| US | 2013328898 | A1 | 12 December 2013 | US | 8970613 | B2 | 03 March 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410697901
- WO 2021114105136 A
- WO 202111410643X A